(19) Europäisches Patentamt / European Patent Office / Office européen des brevets

(11) **EP 4 327 122 B1**

(12) **EUROPEAN PATENT SPECIFICATION**

(45) Date of publication and mention
of the grant of the patent:
**05.08.2026 Bulletin 2026/32**

(51) International Patent Classification (IPC):
**G01S 7/481** *(2006.01)* **G01S 17/931** *(2020.01)*
**G02B 27/10** *(2006.01)* **G02B 27/14** *(2006.01)*

(21) Application number: **22741614.6**

(22) Date of filing: **10.06.2022**

(52) Cooperative Patent Classification (CPC):
**G01S 7/4814; G01S 7/4816; G01S 7/4865;**
**G01S 13/865; G01S 17/86; G01S 17/931;**
**G02B 27/106; G02B 27/145;** G01S 15/86;
G01S 15/931; G02B 26/101

(86) International application number:
**PCT/US2022/033130**

(87) International publication number:
**WO 2022/261517 (15.12.2022 Gazette 2022/50)**

(54) **TRANSMITTER CHANNELS OF LIGHT DETECTION AND RANGING SYSTEMS**

SENDEKANÄLE VON LICHTDETEKTIONS- UND ENTFERNUNGSMESSSYSTEMEN

CANAUX D'ÉMISSION DES SYSTÈMES DE DÉTECTION ET DE TÉLÉMÉTRIE PAR LA LUMIÈRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **11.06.2021 US 202163209856 P**

(43) Date of publication of application:
**28.02.2024 Bulletin 2024/09**

(73) Proprietor: **Seyond, Inc.**
**Sunnyvale, CA 94086 (US)**

(72) Inventors:
• **LI, Yufeng**
**Sunnyvale, CA 94086 (US)**
• **LI, Yimin**
**Sunnyvale, CA 94086 (US)**
• **ZHANG, Rui**
**Palo Alto, CA 94303 (US)**
• **LI, Randy Xi**
**Sunnyvale, CA 94086 (US)**
• **WAN, Peng**
**Sunnyvale, CA 94086 (US)**
• **BAO, Junwei**
**Sunnyvale, CA 94086 (US)**

(74) Representative: **Reddie & Grose LLP**
**The White Chapel Building**
**10 Whitechapel High Street**
**London E1 8QS (GB)**

(56) References cited:
GB-A- 1 185 322 US-A1- 2019 107 622
US-A1- 2021 103 034

## Description

## FIELD OF THE TECHNOLOGY

This disclosure relates generally to optical scanning and, more particularly, to a light detection and ranging (LiDAR) system having multiple transmitter channels using optical beam splitters.

## BACKGROUND

Light detection and ranging (LiDAR) systems use light pulses to create an image or point cloud of the external environment. Some typical LiDAR systems include a light source, a light transmitter, a light steering system, and a light receiver and detector. The light source generates a light beam that is directed by the light steering system in particular directions when being transmitted from the LiDAR system. When a transmitted light beam is scattered by an object, a portion of the scattered light returns to the LiDAR system as a return light pulse. The light receiver receives the return light pulse and the detector detects the return light pulse. Using the difference between the time that the return light pulse is detected and the time that a corresponding light pulse in the light beam is transmitted, the LiDAR system can determine the distance to the object using the speed of light. The light steering system can direct light beams along different paths to allow the LiDAR system to scan the surrounding environment and produce images or point clouds. LiDAR systems can also use techniques other than time-of-flight and scanning to measure the surrounding environment.

US 2021/103034 discloses a time-of-flight (ToF) optical beam splitter which includes a main body having a first reflectivity and comprising a main surface configured to receive a receive light beam from an environment that corresponds to a transmit light beam transmitted into the environment, where the main surface includes a first region and a second region; and a reflective coating disposed on the main surface at the first region and excluded from the main surface at the second region, where the reflective coating has second reflectivity that is greater than the first reflectivity.

US 2019/107622 discloses a LiDAR detection system which includes a beam splitting device which generates a plurality of mutually parallel output beams of light from a first beam of light.

GB 1185322 discloses an 85 feet diameter parabolic dish aerial fitted with apparatus comprising a laser multibeam light source and a plurality of photo-cells mounted on the dish, for determining departure of the shape of the dish from the ideal.

## SUMMARY

An aspect of the present invention is defined by the independent claim below to which reference should now be made. Optional features are defined by the dependent claims.

Embodiments provided in this disclosure use multiple transmitter channels enabled by an optical beam splitter. The optical beam splitter can form multiple transmission light beams. Adjacent transmitter channels provide transmission light beams formed at a preconfigured angular channel spacing. A properly configured optical beam splitter can provide equal or substantially equal beam intensities among the multiple transmission light beams. When the angular channel spacing and the beam intensities of the multiple transmission light beams are properly configured, the scanning performance of the LiDAR system can be improved. Furthermore, the dimension and complexity of the transmitter can be reduced such that the LiDAR system is more compact. In addition, the optical beam splitter can comprise an optical prism-based beam splitter or a diffractive optical element (DOE) based beam splitter. These types of beam splitters can be preconfigured or manufactured such that they eliminate the need for individual transmitter channel alignment, thereby simplifying the subsequent assembly process of the LiDAR system. Furthermore, these types of beam splitters also reduce the component count in the transceiver of the LiDAR system, making the overall system more robust and reliable.

## BRIEF DESCRIPTION OF THE DRAWINGS

The present application can be best understood by reference to the figures described below taken in conjunction with the accompanying drawing figures, in which like parts may be referred to by like numerals.

FIG. 1 illustrates one or more example LiDAR systems disposed or included in a motor vehicle.
FIG. 2 is a block diagram illustrating interactions between an example LiDAR system and multiple other systems including a vehicle perception and planning system.
FIG. 3 is a block diagram illustrating an example LiDAR system.
FIG. 4 is a block diagram illustrating an example fiber-based laser source.
FIGs. 5A-5C illustrate an example LiDAR system using pulse signals to measure distances to objects disposed in a field-of-view (FOV).
FIG. 6 is a block diagram illustrating an example apparatus used to implement systems, apparatus, and methods in various embodiments.
FIG. 7 is a block diagram of an example transceiver of a LiDAR system using a prism-based beam splitter according to some embodiments.
FIGs. 8A and 8B are diagrams illustrating an example prism-based beam splitter and the associated transmitter optical paths according to some embodiments.
FIG. 9A illustrates a perspective view of an example optical prism-based beam splitter according to some embodiments.

FIG. 9B illustrates two examples of a front facet of the optical prism-based beam splitter according to some embodiments.

FIG. 10A is a diagram illustrating an example optical prism-based beam splitter and its output beams according to some embodiments.

FIG. 10B illustrates an example optical prism-based beam splitter having a small wedge angle according to some embodiments.

FIG. 10C illustrates an example optical prism-based beam splitter having a large wedge angle according to some embodiments.

FTG.11 is a block diagram of another example transceiver of a LiDAR system according to some embodiments not according to the claims.

FIG. 12 illustrates diffractive optical element (DOE) based beam splitter according to some embodiments not according to the claims.

FIG. 13 is a flowchart illustrating a method for providing multiple transmission light beams according to some embodiments.

## DETAILED DESCRIPTION

To provide a more thorough understanding of the present invention, the following description sets forth numerous specific details, such as specific configurations, parameters, examples, and the like. It should be recognized, however, that such description is not intended as a limitation on the scope of the present invention but is intended to provide a better description of the exemplary embodiments.

Throughout the specification and claims, the following terms take the meanings explicitly associated herein, unless the context clearly dictates otherwise:

The phrase "in one embodiment" as used herein does not necessarily refer to the same embodiment, though it may. Thus, as described below, various embodiments of the disclosure may be readily combined, without departing from the scope of the invention.

As used herein, the term "or" is an inclusive "or" operator and is equivalent to the term "and/or," unless the context clearly dictates otherwise.

The term "based on" is not exclusive and allows for being based on additional factors not described unless the context clearly dictates otherwise.

As used herein, and unless the context dictates otherwise, the term "coupled to" is intended to include both direct coupling (in which two elements that are coupled to each other contact each other) and indirect coupling (in which at least one additional element is located between the two elements). Therefore, the terms "coupled to" and "coupled with" are used synonymously. Within the context of a networked environment where two or more components or devices are able to exchange data, the terms "coupled to" and "coupled with" are also used to mean "communicatively coupled with", possibly via one or more intermediary devices.

Although the following description uses terms "first," "second," etc. to describe various elements, these elements should not be limited by the terms. These terms are only used to distinguish one element from another. For example, a first facet could be termed a second facet and, similarly, a second facet could be termed a first facet, without departing from the scope of the various described examples. The first facet and the second facet can both be facets and, in some cases, can be separate and different facets.

In addition, throughout the specification, the meaning of "a", "an", and "the" includes plural references, and the meaning of "in" includes "in" and "on".

Although some of the various embodiments presented herein constitute a single combination of inventive elements, it should be appreciated that the inventive subject matter is considered to include all possible combinations of the disclosed elements. As such, if one embodiment comprises elements A, B, and C, and another embodiment comprises elements B and D, then the inventive subject matter is also considered to include other remaining combinations of A, B, C, or D, even if not explicitly discussed herein. Further, the transitional term "comprising" means to have as parts or members, or to be those parts or members. As used herein, the transitional term "comprising" is inclusive or open-ended and does not exclude additional, unrecited elements or method steps.

Throughout the following disclosure, numerous references may be made regarding servers, services, interfaces, engines, modules, clients, peers, portals, platforms, or other systems formed from computing devices. It should be appreciated that the use of such terms is deemed to represent one or more computing devices having at least one processor (e.g., ASIC, FPGA, PLD, DSP, x86, ARM, RISC-V, ColdFire, GPU, multi-core processors, etc.) configured to execute software instructions stored on a computer readable tangible, non-transitory medium (e.g., hard drive, solid state drive, RAM, flash, ROM, etc.). For example, a server can include one or more computers operating as a web server, database server, or other type of computer server in a manner to fulfill described roles, responsibilities, or functions. One should further appreciate the disclosed computer-based algorithms, processes, methods, or other types of instruction sets can be embodied as a computer program product comprising a non-transitory, tangible computer readable medium storing the instructions that cause a processor to execute the disclosed steps. The various servers, systems, databases, or interfaces can exchange data using standardized protocols or algorithms, possibly based on HTTP, HTTPS, AES, public-private key exchanges, web service APIs, known financial transaction protocols, or other electronic information exchanging methods. Data exchanges can be conducted over a packet-switched network, a circuit-switched network, the Internet, LAN, WAN, VPN, or other type of network.

As used in the description herein and throughout the claims that follow, when a system, engine, server, device, module, or other computing element is described as being configured to perform or execute functions on data in a memory, the meaning of "configured to" or "programmed to" is defined as one or more processors or cores of the computing element being programmed by a set of software instructions stored in the memory of the computing element to execute the set of functions on target data or data objects stored in the memory.

It should be noted that any language directed to a computer should be read to include any suitable combination of computing devices or network platforms, including servers, interfaces, systems, databases, agents, peers, engines, controllers, modules, or other types of computing devices operating individually or collectively. One should appreciate the computing devices comprise a processor configured to execute software instructions stored on a tangible, non-transitory computer readable storage medium (e.g., hard drive, FPGA, PLA, solid state drive, RAM, flash, ROM, etc.). The software instructions configure or program the computing device to provide the roles, responsibilities, or other functionality as discussed below with respect to the disclosed apparatus. Further, the disclosed technologies can be embodied as a computer program product that includes a non-transitory computer readable medium storing the software instructions that causes a processor to execute the disclosed steps associated with implementations of computer-based algorithms, processes, methods, or other instructions. In some embodiments, the various servers, systems, databases, or interfaces exchange data using standardized protocols or algorithms, possibly based on HTTP, HTTPS, AES, public-private key exchanges, web service APIs, known financial transaction protocols, or other electronic information exchanging methods. Data exchanges among devices can be conducted over a packet-switched network, the Internet, LAN, WAN, VPN, or other type of packet switched network; a circuit switched network; cell switched network; or other type of network.

A LiDAR system may include one or more transmitter channels for transmitting laser beams. In some embodiments, using multiple transmitter channels, the LiDAR system transmits multiple transmission light beams to scan the external environment. The LiDAR system's scanning resolution and speed can be improved by using multiple light beams compared to using just a single light beam. Furthermore, multiple transmitter channels facilitate reducing the requirement for moving a scanning optical device in the steering mechanism, such as a polygon mirror. For example, by using multiple transmitter channels, the rotational speed of the polygon mirror can be reduced while still allowing the LiDAR system to scan the same or similar areas of a field-of-view. On the other hand, multiple transmitter channels (e.g., four or more channels) may make it difficult to keep the LiDAR system compact. For example, if each transmitter channel has its own collimation lens and/or other optical and/or electrical components, the dimension of the transmitter may increase significantly when the number of transmitter channels increases. The complexity of the transmitter may increase too, making it less robust and reliable. Multiple transmitter channels may also cause additional alignment complexity because the optical components in each channel may need to be individually aligned. Thus, it is desirable to have a low-complexity and compact transmitter with multiple transmitter channels. Oftentimes, a compact LiDAR system is needed for fitting into small spaces in a vehicle (e.g., corner spaces, rearview mirrors, or the like). A reliable transmitter in a LiDAR system is also desirable because a LiDAR system frequently operates under large variations of environment conditions including temperature, humidity, vibration, etc. Further, the optical component alignment process should be simplified to improve the assembly efficiency and reduce cost. Therefore, there is a need for a compact, less-complex, and reliable LiDAR system with multiple transmitter channels.

Embodiments of LiDAR systems disclosed herein use multiple transmitter channels comprising an optical beam splitter. The optical beam splitter is a prism-based beam splitter or, not according to the claims, a DOE-based beam splitter. The optical beam splitter receives a collimated light beam formed by a collimation lens. Based on the collimated light beam, the optical beam splitter can form multiple output light beams for all transmitter channels. By properly configuring the optical characteristics of the optical beam splitter, a desired angular channel spacing between the transmitter channels can be obtained. The angular channel spacing is a parameter that measures or represents the degree of angular separation between the light beams transmitted by the multiple transmitter channels to scan an FOV. When the adjacent transmitter channels are configured to have the proper angular channel spacing, the multiple transmission light beams are positioned at a desired angular separation to scan different areas within an FOV, providing a good coverage of the scanned areas and improving the scan resolution and speed. Furthermore, the optical beam splitter can be configured to form output beams having equal or substantially equal beam intensities, thereby providing good data consistency across the transmitter channels. As a result, the scanning performance of the LiDAR system can be improved by using multiple transmitter channels configured to have a proper angular channel spacing and equalized beam intensities.

Furthermore, by using a properly configured optical beam splitter, the transmitter can have fewer optical components than a conventional multiple-channel transmitter. As a result, the transmitter, and in turn the LiDAR system, can be made more compact, more reliable, and more cost-efficient. The burden and complexity of optical alignment for each transmitter channel can be significantly reduced because once the optical beam splitter is manufactured and/or properly configured, all transmitter channels are aligned. Therefore, there is no need to align each transmitter channel individually. For example, a collimation lens is not required to be placed to collimate the transmission light beams form by the optical beam splitter, thereby reducing the optical component count and the alignment complexity. As a result, many transmitter channels can be easily assembled into a small space, thereby improving the assembly efficiency, reducing the dimensions of the transceiver, and making the LiDAR system more robust.

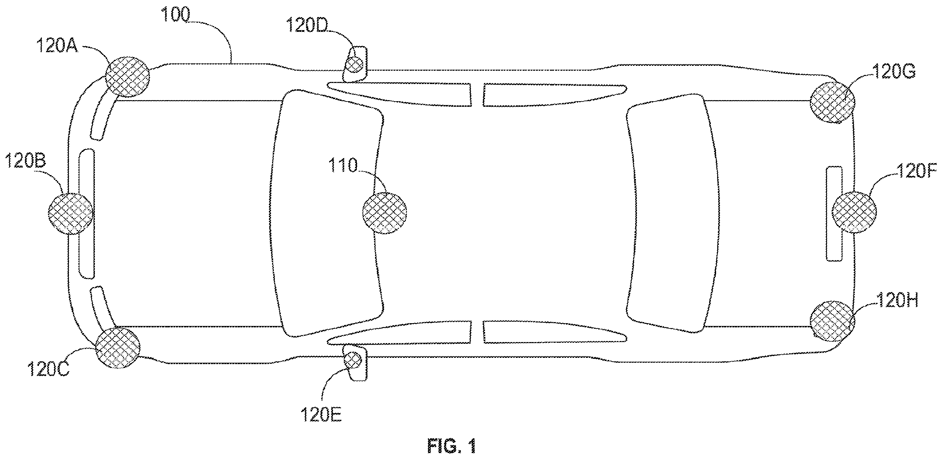

FIG. 1 illustrates one or more exemplary LiDAR systems 110 disposed or included in a motor vehicle 100. Motor vehicle 100 can be a vehicle having any automated level. For example, motor vehicle 100 can be a partially automated vehicle, a highly automated vehicle, a fully automated vehicle, or a driverless vehicle. A partially automated vehicle can perform some driving functions without a human driver's intervention. For example, a partially automated vehicle can perform blind-spot monitoring, lane keeping and/or lane changing operations, automated emergency braking, smart cruising and/or traffic following, or the like. Certain operations of a partially automated vehicle may be limited to specific applications or driving scenarios (e.g., limited to only freeway driving). A highly automated vehicle can generally perform all operations of a partially automated vehicle but with less limitations. A highly automated vehicle can also detect its own limits in operating the vehicle and ask the driver to take over the control of the vehicle when necessary. A fully automated vehicle can perform all vehicle operations without a driver's intervention but can also detect its own limits and ask the driver to take over when necessary. A driverless vehicle can operate on its own without any driver intervention.

In typical configurations, motor vehicle 100 comprises one or more LiDAR systems 110 and 120A-F. Each of LiDAR systems 110 and 120A-F can be a scanning-based LiDAR system and/or a non-scanning LiDAR system (e.g., a flash LiDAR). A scanning-based LiDAR system scans one or more light beams in one or more directions (e.g., horizontal and vertical directions) to detect objects in a field-of-view (FOV). A non-scanning based LiDAR system transmits laser light to illuminate an FOV without scanning. For example, a flash LiDAR is a type of non-scanning based LiDAR system. A flash LiDAR can transmit laser light to simultaneously illuminate an FOV using a single light pulse or light shot.

A LiDAR system is often an essential sensor of a vehicle that is at least partially automated. In one embodiment, as shown in FIG. 1, motor vehicle 100 may include a single LiDAR system 110 (e.g., without LiDAR systems 120A-F) disposed at the highest position of the vehicle (e.g., at the vehicle roof). Disposing LiDAR system 110 at the vehicle roof facilitates a 360-degree scanning around vehicle 100. In some other embodiments, motor vehicle 100 can include multiple LiDAR systems, including two or more of systems 110 and/or 120A-F. As shown in FIG. 1, in one embodiment, multiple LiDAR systems 110 and/or 120A-F are attached to vehicle 100 at different locations of the vehicle. For example, LiDAR system 120A is attached to vehicle 100 at the front right corner; LiDAR system 120B is attached to vehicle 100 at the front center; LiDAR system 120C is attached to vehicle 100 at the front left corner; LiDAR system 120D is attached to vehicle 100 at the right-side rear view mirror; LiDAR system 120E is attached to vehicle 100 at the left-side rear view mirror; and/or LiDAR system 120F is attached to vehicle 100 at the back center. In some embodiments, LiDAR systems 110 and 120A-F are independent LiDAR systems having their own respective laser sources, control electronics, transmitters, receivers, and/or steering mechanisms. In other embodiments, some of LiDAR systems 110 and 120A-F can share one or more components, thereby forming a distributed sensor system. In one example, optical fibers are used to deliver laser light from a centralized laser source to all LiDAR systems. It is understood that one or more LiDAR systems can be distributed and attached to a vehicle in any desired manner and FIG. 1 only illustrates one embodiment. As another example, LiDAR systems 120D and 120E may be attached to the B-pillars of vehicle 100 instead of the rear-view mirrors. As another example, LiDAR system 120B may be attached to the windshield of vehicle 100 instead of the front bumper.

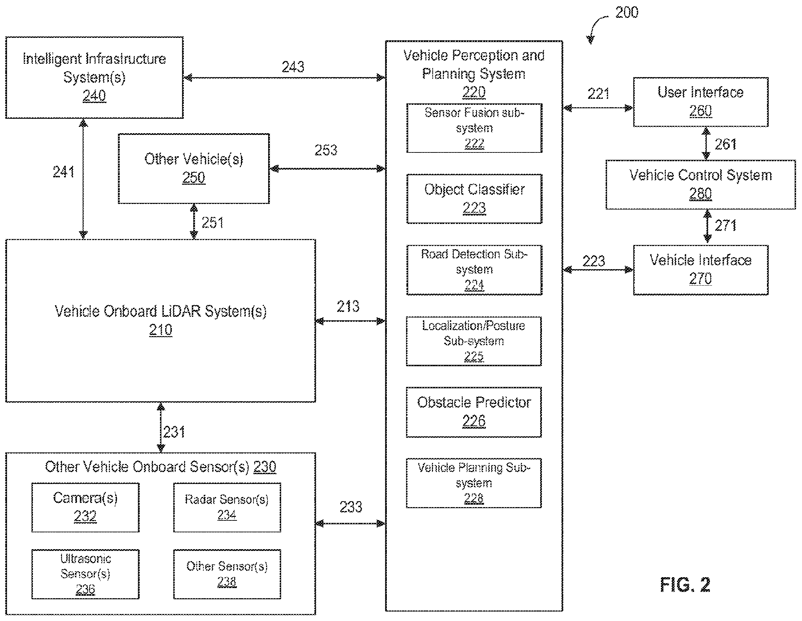

FIG. 2 is a block diagram 200 illustrating interactions between vehicle onboard LiDAR system(s) 210 and multiple other systems including a vehicle perception and planning system 220. LiDAR system(s) 210 can be mounted on or integrated to a vehicle. LiDAR system(s) 210 include sensor(s) that scan laser light to the surrounding environment to measure the distance, angle, and/or velocity of objects. Based on the scattered light that returned to LiDAR system(s) 210, it can generate sensor data (e.g., image data or 3D point cloud data) representing the perceived external environment.

LiDAR system(s) 210 can include one or more of short-range LiDAR sensors, medium-range LiDAR sensors, and long-range LiDAR sensors. A short-range LiDAR sensor measures objects located up to about 20-40 meters from the LiDAR sensor. Short-range LiDAR sensors can be used for, e.g., monitoring nearby moving objects (e.g., pedestrians crossing street in a school zone), parking assistance applications, or the like. A medium-range LiDAR sensor measures objects located up to about 100-150 meters from the LiDAR sensor. Medium-range LiDAR sensors can be used for, e.g., monitoring road intersections, assistance for merging onto or leaving a freeway, or the like. A long-range LiDAR sensor measures objects located up to about 150-300 meters. Long-range LiDAR sensors are typically used when a vehicle is travelling at high speed (e.g., on a freeway), such that the vehicle's control systems may only have a few seconds (e.g., 6-8 seconds) to respond to any situations detected by the LiDAR sensor. As shown in FIG. 2, in one embodiment, the LiDAR sensor data can be provided to vehicle perception and planning system 220 via a communication path 213 for further processing and controlling the vehicle operations. Communication path 213 can be any wired or wireless communication links that can transfer data.

With reference still to FIG. 2, in some embodiments, other vehicle onboard sensor(s) 230 are used to provide additional sensor data separately or together with LiDAR system(s) 210. Other vehicle onboard sensors 230 may include, for example, one or more camera(s) 232, one or more radar(s) 234, one or more ultrasonic sensor(s) 236, and/or other sensor(s) 238. Camera(s) 232 can take images and/or videos of the external environment of a vehicle. Camera(s) 232 can take, for example, high-definition (HD) videos having millions of pixels in each frame. A camera produces monochrome or color images and videos. Color information may be important in interpreting data for some situations (e.g., interpreting images of traffic lights). Color information may not be available from other sensors such as LiDAR or radar sensors. Camera(s) 232 can include one or more of narrow-focus cameras, wider-focus cameras, side-facing cameras, infrared cameras, fisheye cameras, or the like. The image and/or video data generated by camera(s) 232 can also be provided to vehicle perception and planning system 220 via communication path 233 for further processing and controlling the vehicle operations. Communication path 233 can be any wired or wireless communication links that can transfer data.

Other vehicle onboard sensos(s) 230 can also include radar sensor(s) 234. Radar sensor(s) 234 use radio waves to determine the range, angle, and velocity of objects. Radar sensor(s) 234 produce electromagnetic waves in the radio or microwave spectrum. The electromagnetic waves reflect off an object and some of the reflected waves return to the radar sensor, thereby providing information about the object's position and velocity. Radar sensor(s) 234 can include one or more of short-range radar(s), medium-range radar(s), and long-range radar(s). A short-range radar measures objects located at about 0.1-30 meters from the radar. A short-range radar is useful in detecting objects located nearby the vehicle, such as other vehicles, buildings, walls, pedestrians, bicyclists, etc. A short-range radar can be used to detect a blind spot, assist in lane changing, provide rear-end collision warning, assist in parking, provide emergency braking, or the like. A medium-range radar measures objects located at about 30-80 meters from the radar. A long-range radar measures objects located at about 80-200 meters. Medium- and/or long-range radars can be useful in, for example, traffic following, adaptive cruise control, and/or highway automatic braking. Sensor data generated by radar sensor(s) 234 can also be provided to vehicle perception and planning system 220 via communication path 233 for further processing and controlling the vehicle operations.

Other vehicle onboard sensor(s) 230 can also include ultrasonic sensor(s) 236. Ultrasonic sensor(s) 236 use acoustic waves or pulses to measure object located external to a vehicle. The acoustic waves generated by ultrasonic sensor(s) 236 are transmitted to the surrounding environment. At least some of the transmitted waves are reflected off an object and return to the ultrasonic sensor(s) 236. Based on the return signals, a distance of the object can be calculated. Ultrasonic sensor(s) 236 can be useful in, for example, check blind spot, identify parking spots, provide lane changing assistance into traffic, or the like. Sensor data generated by ultrasonic sensor(s) 236 can also be provided to vehicle perception and planning system 220 via communication path 233 for further processing and controlling the vehicle operations.

In some embodiments, one or more other sensor(s) 238 may be attached in a vehicle and may also generate sensor data. Other sensor(s) 238 may include, for example, global positioning systems (GPS), inertial measurement units (IMU), or the like. Sensor data generated by other sensor(s) 238 can also be provided to vehicle perception and planning system 220 via communication path 233 for further processing and controlling the vehicle operations. It is understood that communication path 233 may include one or more communication links to transfer data between the various sensor(s) 230 and vehicle perception and planning system 220.

In some embodiments, as shown in FIG. 2, sensor data from other vehicle onboard sensor(s) 230 can be provided to vehicle onboard LiDAR system(s) 210 via communication path 231. LiDAR system(s) 210 may process the sensor data from other vehicle onboard sensor(s) 230. For example, sensor data from camera(s) 232, radar sensor(s) 234, ultrasonic sensor(s) 236, and/or other sensor(s) 238 may be correlated or fused with sensor data LiDAR system(s) 210, thereby at least partially offloading the sensor fusion process performed by vehicle perception and planning system 220. It is understood that other configurations may also be implemented for transmitting and processing sensor data from the various sensors (e.g., data can be transmitted to a cloud service for processing and then the processing results can be transmitted back to the vehicle perception and planning system 220).

With reference still to FIG. 2, in some embodiments, sensors onboard other vehicle(s) 250 are used to provide additional sensor data separately or together with LiDAR system(s) 210. For example, two or more nearby vehicles may have their own respective LiDAR sensor(s), camera(s), radar sensor(s), ultrasonic sensor(s), etc. Nearby vehicles can communicate and share sensor data with one another. Communications between vehicles are also referred to as V2V (vehicle to vehicle) communications. For example, as shown in FIG. 2, sensor data generated by other vehicle(s) 250 can be communicated to vehicle perception and planning system 220 and/or vehicle onboard LiDAR system(s) 210, via communication path 253 and/or communication path 251, respectively. Communication paths 253 and 251 can be any wired or wireless communication links that can transfer data.

Sharing sensor data facilitates a better perception of the environment external to the vehicles. For instance, a first vehicle may not sense a pedestrian that is a behind a second vehicle but is approaching the first vehicle. The second vehicle may share the sensor data related to this pedestrian with the first vehicle such that the first vehicle can have additional reaction time to avoid collision with the pedestrian. In some embodiments, similar to data generated by sensor(s) 230, data generated by sensors onboard other vehicle(s) 250 may be correlated or fused with sensor data generated by LiDAR system(s) 210, thereby at least partially offloading the sensor fusion process performed by vehicle perception and planning system 220.

In some embodiments, intelligent infrastructure system(s) 240 are used to provide sensor data separately or together with LiDAR system(s) 210. Certain infrastructures may be configured to communicate with a vehicle to convey information and vice versa. Communications between a vehicle and infrastructures are generally referred to as V2I (vehicle to infrastructure) communications. For example, intelligent infrastructure system(s) 240 may include an intelligent traffic light that can convey its status to an approaching vehicle in a message such as "changing to yellow in 5 seconds." Intelligent infrastructure system(s) 240 may also include its own LiDAR system mounted near an intersection such that it can convey traffic monitoring information to a vehicle. For example, a left-turning vehicle at an intersection may not have sufficient sensing capabilities because some of its own sensors may be blocked by traffics in the opposite direction. In such a situation, sensors of intelligent infrastructure system(s) 240 can provide useful, and sometimes vital, data to the left-turning vehicle. Such data may include, for example, traffic conditions, information of objects in the direction the vehicle is turning to, traffic light status and predictions, or the like. These sensor data generated by intelligent infrastructure system(s) 240 can be provided to vehicle perception and planning system 220 and/or vehicle onboard LiDAR system(s) 210, via communication paths 243 and/or 241, respectively. Communication paths 243 and/or 241 can include any wired or wireless communication links that can transfer data. For example, sensor data from intelligent infrastructure system(s) 240 may be transmitted to LiDAR system(s) 210 and correlated or fused with sensor data generated by LiDAR system(s) 210, thereby at least partially offloading the sensor fusion process performed by vehicle perception and planning system 220. V2V and V2I communications described above are examples of vehicle-to-X (V2X) communications, where the "X" represents any other devices, systems, sensors, infrastructure, or the like that can share data with a vehicle.

With reference still to FIG. 2, via various communication paths, vehicle perception and planning system 220 receives sensor data from one or more of LiDAR system(s) 210, other vehicle onboard sensor(s) 230, other vehicle(s) 250, and/or intelligent infrastructure system(s) 240. In some embodiments, different types of sensor data are correlated and/or integrated by a sensor fusion sub-system 222. For example, sensor fusion sub-system 222 can generate a 360-degree model using multiple images or videos captured by multiple cameras disposed at different positions of the vehicle. Sensor fusion sub-system 222 obtains sensor data from different types of sensors and uses the combined data to perceive the environment more accurately. For example, a vehicle onboard camera 232 may not capture a clear image because it is facing the sun or a light source (e.g., another vehicle's headlight during nighttime) directly. A LiDAR system 210 may not be affected as much and therefore sensor fusion sub-system 222 can combine sensor data provided by both camera 232 and LiDAR system 210, and use the sensor data provided by LiDAR system 210 to compensate the unclear image captured by camera 232. As another example, in a rainy or foggy weather, a radar sensor 234 may work better than a camera 232 or a LiDAR system 210. Accordingly, sensor fusion sub-system 222 may use sensor data provided by the radar sensor 234 to compensate the sensor data provided by camera 232 or LiDAR system 210.

In other examples, sensor data generated by other vehicle onboard sensor(s) 230 may have a lower resolution (e.g., radar sensor data) and thus may need to be correlated and confirmed by LiDAR system(s) 210, which usually has a higher resolution. For example, a sewage cover (also referred to as a manhole cover) may be detected by radar sensor 234 as an object towards which a vehicle is approaching. Due to the low-resolution nature of radar sensor 234, vehicle perception and planning system 220 may not be able to determine whether the object is an obstacle that the vehicle needs to avoid. High-resolution sensor data generated by LiDAR system(s) 210 thus can be used to correlated and confirm that the object is a sewage cover and causes no harm to the vehicle.

Vehicle perception and planning system 220 further comprises an object classifier 223. Using raw sensor data and/or correlated/fused data provided by sensor fusion sub-system 222, object classifier 223 can detect and classify the objects and estimate the positions of the objects. In some embodiments, object classifier 233 can use machine-learning based techniques to detect and classify objects. Examples of the machine-learning based techniques include utilizing algorithms such as region-based convolutional neural networks (R-CNN), Fast R-CNN, Faster R-CNN, histogram of oriented gradients (HOG), region-based fully convolutional network (R-FCN), single shot detector (SSD), spatial pyramid pooling (SPP-net), and/or You Only Look Once (Yolo).

Vehicle perception and planning system 220 further comprises a road detection sub-system 224.

Road detection sub-system 224 localizes the road and identifies objects and/or markings on the road. For example, based on raw or fused sensor data provided by radar sensor(s) 234, camera(s) 232, and/or LiDAR system(s) 210, road detection sub-system 224 can build a 3D model of the road based on machine-learning techniques (e.g., pattern recognition algorithms for identifying lanes). Using the 3D model of the road, road detection sub-system 224 can identify objects (e.g., obstacles or debris on the road) and/or markings on the road (e.g., lane lines, turning marks, crosswalk marks, or the like).

Vehicle perception and planning system 220 further comprises a localization and vehicle posture sub-system 225. Based on raw or fused sensor data, localization and vehicle posture sub-system 225 can determine position of the vehicle and the vehicle's posture. For example, using sensor data from LiDAR system(s) 210, camera(s) 232, and/or GPS data, localization and vehicle posture sub-system 225 can determine an accurate position of the vehicle on the road and the vehicle's six degrees of freedom (e.g., whether the vehicle is moving forward or backward, up or down, and left or right). In some embodiments, high-definition (HD) maps are used for vehicle localization. HD maps can provide highly detailed, three-dimensional, computerized maps that pinpoint a vehicle's location. For instance, using the HD maps, localization and vehicle posture sub-system 225 can determine precisely the vehicle's current position (e.g., which lane of the road the vehicle is currently in, how close it is to a curb or a sidewalk) and predict vehicle's future positions.

Vehicle perception and planning system 220 further comprises obstacle predictor 226. Objects identified by object classifier 223 can be stationary (e.g., a light pole, a road sign) or dynamic (e.g., a moving pedestrian, bicycle, another car). For moving objects, predicting their moving path or future positions can be important to avoid collision. Obstacle predictor 226 can predict an obstacle trajectory and/or warn the driver or the vehicle planning sub-system 228 about a potential collision. For example, if there is a high likelihood that the obstacle's trajectory intersects with the vehicle's current moving path, obstacle predictor 226 can generate such a warning. Obstacle predictor 226 can use a variety of techniques for making such a prediction. Such techniques include, for example, constant velocity or acceleration models, constant turn rate and velocity/acceleration models, Kalman Filter and Extended Kalman Filter based models, recurrent neural network (RNN) based models, long short-term memory (LSTM) neural network based models, encoder-decoder RNN models, or the like.

With reference still to FIG. 2, in some embodiments, vehicle perception and planning system 220 further comprises vehicle planning sub-system 228. Vehicle planning sub-system 228 can include a route planner, a driving behaviors planner, and a motion planner. The route planner can plan the route of a vehicle based on the vehicle's current location data, target location data, traffic information, etc. The driving behavior planner adjusts the timing and planned movement based on how other objects might move, using the obstacle prediction results provided by obstacle predictor 226. The motion planner determines the specific operations the vehicle needs to follow. The planning results are then communicated to vehicle control system 280 via vehicle interface 270. The communication can be performed through communication paths 223 and 271, which include any wired or wireless communication links that can transfer data.

Vehicle control system 280 controls the vehicle's steering mechanism, throttle, brake, etc., to operate the vehicle according to the planned route and movement. Vehicle perception and planning system 220 may further comprise a user interface 260, which provides a user (e.g., a driver) access to vehicle control system 280 to, for example, override or take over control of the vehicle when necessary. User interface 260 can communicate with vehicle perception and planning system 220, for example, to obtain and display raw or fused sensor data, identified objects, vehicle's location/posture, etc. These displayed data can help a user to better operate the vehicle. User interface 260 can communicate with vehicle perception and planning system 220 and/or vehicle control system 280 via communication paths 221 and 261 respectively, which include any wired or wireless communication links that can transfer data. It is understood that the various systems, sensors, communication links, and interfaces in FIG. 2 can be configured in any desired manner and not limited to the configuration shown in FIG. 2.

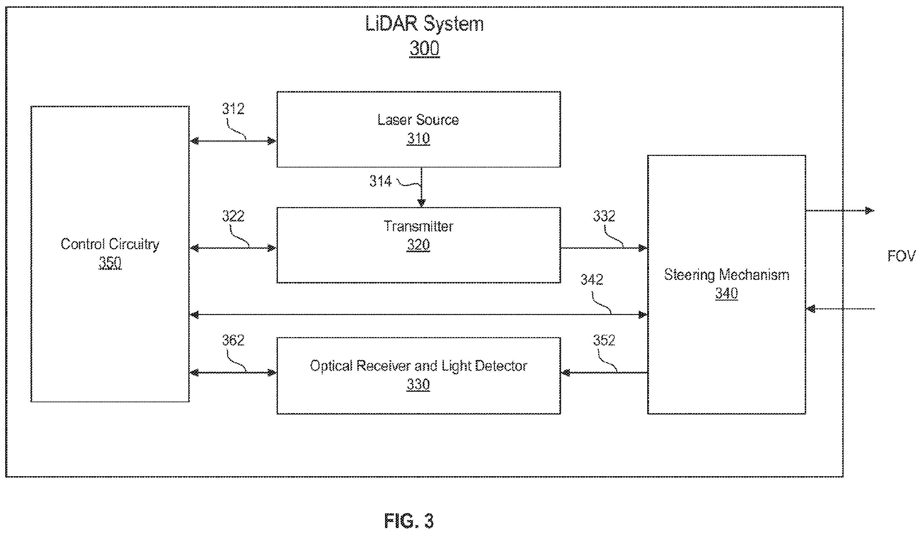

FIG. 3 is a block diagram illustrating an exemplary LiDAR system 300. LiDAR system 300 can be used to implement LiDAR system 110, 120A-F, and/or 210 shown in FIGs. 1 and 2. In one embodiment, LiDAR system 300 comprises a laser source 310, a transmitter 320, an optical receiver and light detector 330, a steering system 340, and a control circuitry 350. These components are coupled together using communications paths 312, 314, 322, 332, 343, 352, and 362. These communications paths include communication links (wired or wireless, bidirectional or unidirectional) among the various LiDAR system components, but need not be physical components themselves. While the communications paths can be implemented by one or more electrical wires, buses, or optical fibers, the communication paths can also be wireless channels or free-space optical paths so that no physical communication medium is present. For example, in one embodiment of LiDAR system 300, communication path 314 between laser source 310 and transmitter 320 may be implemented using one or more optical fibers. Communication paths 332 and 352 may represent optical paths implemented using free space optical components and/or optical fibers. And communication paths 312, 322, 342, and 362 may be implemented using one or more electrical wires that carry electrical signals. The communications paths can also include one or more of the above types of communication mediums (e.g., they can include an optical fiber and a free-space optical component, or include one or more optical fibers and one or more electrical wires).

LiDAR system 300 can also include other components not depicted in FIG. 3, such as power buses, power supplies, LED indicators, switches, etc. Additionally, other communication connections among components may be present, such as a direct connection between light source 310 and optical receiver and light detector 330 to provide a reference signal so that the time from when a light pulse is transmitted until a return light pulse is detected can be accurately measured.

Laser source 310 outputs laser light for illuminating objects in a field of view (FOV). Laser source 310 can be, for example, a semiconductor-based laser (e.g., a diode laser) and/or a fiber-based laser. A semiconductor-based laser can be, for example, an edge emitting laser (EEL), a vertical cavity surface emitting laser (VCSEL), or the like. A fiber-based laser is a laser in which the active gain medium is an optical fiber doped with rare-earth elements such as erbium, ytterbium, neodymium, dysprosium, praseodymium, thulium and/or holmium. In some embodiments, a fiber laser is based on double-clad fibers, in which the gain medium forms the core of the fiber surrounded by two layers of cladding. The double-clad fiber allows the core to be pumped with a high-power beam, thereby enabling the laser source to be a high-power fiber laser source.

In some embodiments, laser source 310 comprises a master oscillator (also referred to as a seed laser) and power amplifier (MOPA). The power amplifier amplifies the output power of the seed laser. The power amplifier can be a fiber amplifier, a bulk amplifier, or a semiconductor optical amplifier. The seed laser can be a diode laser (e.g., a Fabry-Perot cavity laser, a distributed feedback laser), a solid-state bulk laser, or a tunable external-cavity diode laser. In some embodiments, laser source 310 can be an optically pumped microchip laser. Microchip lasers are alignment-free monolithic solid-state lasers where the laser crystal is directly contacted with the end mirrors of the laser resonator. A microchip laser is typically pumped with a laser diode (directly or using a fiber) to obtain the desired output power. A microchip laser can be based on neodymium-doped yttrium aluminum garnet ($Y_3Al_5O_{12}$) laser crystals (i.e., Nd:YAG), or neodymium-doped vanadate (i.e., ND:YVO$_4$) laser crystals.

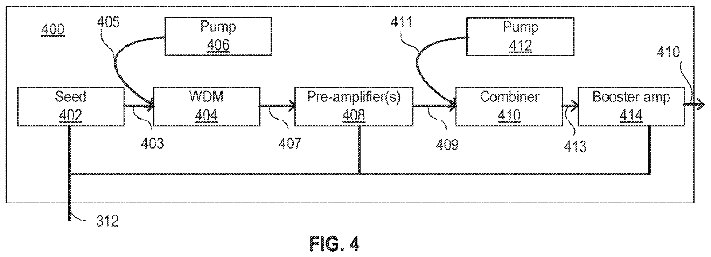

FIG. 4 is a block diagram illustrating an exemplary fiber-based laser source 400 having a seed laser and one or more pumps (e.g., laser diodes) for pumping desired output power. Fiber-based laser source 400 is an example of laser source 310 depicted in FIG. 3. In some embodiments, fiber-based laser source 400 comprises a seed laser 402 to generate initial light pulses of one or more wavelengths (e.g., 1550 nm), which are provided to a wavelength-division multiplexor (WDM) 404 via an optical fiber 403. Fiber-based laser source 400 further comprises a pump 406 for providing laser power (e.g., of a different wavelength, such as 980 nm) to WDM 404 via an optical fiber 405. WDM 404 multiplexes the light pulses provided by seed laser 402 and the laser power provided by pump 406 onto a single optical fiber 407. The output of WDM 404 can then be provided to one or more pre-amplifier(s) 408 via optical fiber 407. Pre-amplifier(s) 408 can be optical amplifier(s) that amplify optical signals (e.g., with about 20-30 dB gain). In some embodiments, pre-amplifier(s) 408 are low noise amplifiers. Pre-amplifier(s) 408 output to a combiner 410 via an optical fiber 409. Combiner 410 combines the output laser light of pre-amplifier(s) 408 with the laser power provided by pump 412 via an optical fiber 411. Combiner 410 can combine optical signals having the same wavelength or different wavelengths. One example of a combiner is a WDM. Combiner 410 provides pulses to a booster amplifier 414, which produces output light pulses via optical fiber 410. The booster amplifier 414 provides further amplification of the optical signals. The outputted light pulses can then be transmitted to transmitter 320 and/or steering mechanism 340 (shown in FIG. 3). It is understood that FIG. 4 illustrates one exemplary configuration of fiber-based laser source 400. Laser source 400 can have many other configurations using different combinations of one or more components shown in FIG. 4 and/or other components not shown in FIG. 4 (e.g., other components such as power supplies, lens, filters, splitters, combiners, etc.).

In some variations, fiber-based laser source 400 can be controlled (e.g., by control circuitry 350) to produce pulses of different amplitudes based on the fiber gain profile of the fiber used in fiber-based laser source 400. Communication path 312 couples fiber-based laser source 400 to control circuitry 350 (shown in FIG. 3) so that components of fiber-based laser source 400 can be controlled by or otherwise communicate with control circuitry 350. Alternatively, fiber-based laser source 400 may include its own dedicated controller. Instead of control circuitry 350 communicating directly with components of fiber-based laser source 400, a dedicated controller of fiber-based laser source 400 communicates with control circuitry 350 and controls and/or communicates with the components of fiber-based light source 400. Fiber-based light source 400 can also include other components not shown, such as one or more power connectors, power supplies, and/or power lines.

Referencing FIG. 3, typical operating wavelengths of laser source 310 comprise, for example, about 850 nm, about 905 nm, about 940 nm, about 1064 nm, and about 1550 nm. The upper limit of maximum usable laser power is set by the U.S. FDA (U.S. Food and Drug Administration) regulations. The optical power limit at 1550 nm wavelength is much higher than those of the other aforementioned wavelengths. Further, at 1550 nm, the optical power loss in a fiber is low. There characteristics of the 1550 nm wavelength make it more beneficial for long-range LiDAR applications. The amount of optical power output from laser source 310 can be characterized by its peak power, average power, and the pulse energy. The peak power is the ratio of pulse energy to the width of the pulse (e.g., full width at half maximum or FWHM). Thus, a smaller pulse width can provide a larger peak power for a fixed amount of pulse energy. A pulse width can be in the range of nanosecond or picosecond. The average power is the product of the energy of the pulse and the pulse repetition rate (PRR). As described in more detail below, the PRR represents the frequency of the pulsed laser light. The PRR typically corresponds to the maximum range that a LiDAR system can measure. Laser source 310 can be configured to produce pulses at high PRR to meet the desired number of data points in a point cloud generated by the LiDAR system. Laser source 310 can also be configured to produce pulses at medium or low PRR to meet the desired maximum detection distance. Wall plug efficiency (WPE) is another factor to evaluate the total power consumption, which may be a key indicator in evaluating the laser efficiency. For example, as shown in FIG. 1, multiple LiDAR systems may be attached to a vehicle, which may be an electrical-powered vehicle or a vehicle otherwise having limited fuel or battery power supply. Therefore, high WPE and intelligent ways to use laser power are often among the important considerations when selecting and configuring laser source 310 and/or designing laser delivery systems for vehicle-mounted LiDAR applications.

It is understood that the above descriptions provide non-limiting examples of a laser source 310. Laser source 310 can be configured to include many other types of light sources (e.g., laser diodes, short-cavity fiber lasers, solid-state lasers, and/or tunable external cavity diode lasers) that are configured to generate one or more light signals at various wavelengths. In some examples, light source 310 comprises amplifiers (e.g., pre-amplifiers and/or booster amplifiers), which can be a doped optical fiber amplifier, a solid-state bulk amplifier, and/or a semiconductor optical amplifier. The amplifiers are configured to receive and amplify light signals with desired gains.

With reference back to FIG. 3, LiDAR system 300 further comprises a transmitter 320. Laser source 310 provides laser light (e.g., in the form of a laser beam) to transmitter 320. The laser light provided by laser source 310 can be amplified laser light with a predetermined or controlled wavelength, pulse repetition rate, and/or power level. Transmitter 320 receives the laser light from laser source 310 and transmits the laser light to steering mechanism 340 with low divergence. In some embodiments, transmitter 320 can include, for example, optical components (e.g., lens, fibers, mirrors, etc.) for transmitting laser beams to a field-of-view (FOV) directly or via steering mechanism 340. While FIG. 3 illustrates transmitter 320 and steering mechanism 340 as separate components, they may be combined or integrated as one system in some embodiments. Steering mechanism 340 is described in more detail below.

Laser beams provided by laser source 310 may diverge as they travel to transmitter 320. Therefore, transmitter 320 often comprises a collimating lens configured to collect the diverging laser beams and produce more parallel optical beams with reduced or minimum divergence. The collimated optical beams can then be further directed through various optics such as mirrors and lens. A collimating lens may be, for example, a simple plano-convex lens or a lens group. The collimating lens can be configured to achieve any desired properties such as the beam diameter, divergence, numerical aperture, focal length, or the like. A beam propagation ratio or beam quality factor (also referred to as the $M^2$ factor) is used for measurement of laser beam quality. In many LiDAR applications, it is important to have good laser beam quality in the generated transmitting laser beam. The $M^2$ factor represents a degree of variation of a beam from an ideal Gaussian beam. Thus, the $M^2$ factor reflects how well a collimated laser beam can be focused on a small spot, or how well a divergent laser beam can be collimated. Therefore, laser source 310 and/or transmitter 320 can be configured to meet, for example, scan resolution requirement while maintaining desired $M^2$ factor.

One or more of the light beams provided by transmitter 320 are scanned by steering mechanism 340 to a FOV. Steering mechanism 340 scans light beams in multiple dimensions (e.g., in both the horizontal and vertical dimension) to facilitate LiDAR system 300 to map the environment by generating a 3D point cloud. Steering mechanism 340 will be described in more detail below. The laser light scanned to an FOV may be scattered or reflected by an object in the FOV. At least a portion of the scattered or reflected light returns to LiDAR system 300. FIG. 3 further illustrates an optical receiver and light detector 330 configured to receive the return light. Optical receiver and light detector 330 comprises an optical receiver that is configured to collect the return light from the FOV. The optical receiver can include optics (e.g., lens, fibers, mirrors, etc.) for receiving, redirecting, focus, amplifying, and/or filtering return light from the FOV. For example, the optical receiver often includes a collection lens (e.g., a simple plano-convex lens or a lens group) to collect and/or focus the collected return light onto a light detector.

A light detector detects the return light focused by the optical receiver and generates current and/or voltage signals proportional to the incident intensity of the return light. Based on such current and/or voltage signals, the depth information of the object in the FOV can be derived. One exemplary method for deriving such depth information is based on the direct TOF (time of flight), which is described in more detail below. A light detector may be characterized by its detection sensitivity, quantum efficiency, detector bandwidth, linearity, signal to noise ratio (SNR), overload resistance, interference immunity, etc. Based on the applications, the light detector can be configured or customized to have any desired characteristics. For example, optical receiver and light detector 330 can be configured such that the light detector has a large dynamic range while having a good linearity. The light detector linearity indicates the detector's capability of maintaining linear relationship between input optical signal power and the detector's output. A detector having good linearity can maintain a linear relationship over a large dynamic input optical signal range.

To achieve desired detector characteristics, configurations or customizations can be made to the light detector's structure and/or the detector's material system. Various detector structure can be used for a light detector. For example, a light detector structure can be a PIN based structure, which has a undoped intrinsic semiconductor region (i.e., an "i" region) between a p-type semiconductor and an n-type semiconductor region. Other light detector structures comprise, for example, a APD (avalanche photodiode) based structure, a PMT (photomultiplier tube) based structure, a SiPM (Silicon photomultiplier) based structure, a SPAD (single-photon avalanche diode) base structure, and/or quantum wires. For material systems used in a light detector, Si, InGaAs, and/or Si/Ge based materials can be used. It is understood that many other detector structures and/or material systems can be used in optical receiver and light detector 330.

A light detector (e.g., an APD based detector) may have an internal gain such that the input signal is amplified when generating an output signal. However, noise may also be amplified due to the light detector's internal gain. Common types of noise include signal shot noise, dark current shot noise, thermal noise, and amplifier noise (TIA). In some embodiments, optical receiver and light detector 330 may include a pre-amplifier that is a low noise amplifier (LNA). In some embodiments, the pre-amplifier may also include a TIA-transimpedance amplifier, which converts a current signal to a voltage signal. For a linear detector system, input equivalent noise or noise equivalent power (NEP) measures how sensitive the light detector is to weak signals. Therefore, they can be used as indicators of the overall system performance. For example, the NEP of a light detector specifies the power of the weakest signal that can be detected and therefore it in turn specifies the maximum range of a LiDAR system. It is understood that various light detector optimization techniques can be used to meet the requirement of LiDAR system 300. Such optimization techniques may include selecting different detector structures, materials, and/or implement signal processing techniques (e.g., filtering, noise reduction, amplification, or the like). For example, in addition to or instead of using direct detection of return signals (e.g., by using TOF), coherent detection can also be used for a light detector. Coherent detection allows for detecting amplitude and phase information of the received light by interfering the received light with a local oscillator. Coherent detection can improve detection sensitivity and noise immunity.

FIG. 3 further illustrates that LiDAR system 300 comprises steering mechanism 340. As described above, steering mechanism 340 directs light beams from transmitter 320 to scan an FOV in multiple dimensions. A steering mechanism is referred to as a raster mechanism or a scanning mechanism. Scanning light beams in multiple directions (e.g., in both the horizontal and vertical directions) facilitates a LiDAR system to map the environment by generating an image or a 3D point cloud. A steering mechanism can be based on mechanical scanning and/or solid-state scanning. Mechanical scanning uses rotating mirrors to steer the laser beam or physically rotate the LiDAR transmitter and receiver (collectively referred to as transceiver) to scan the laser beam. Solid-state scanning directs the laser beam to various positions through the FOV without mechanically moving any macroscopic components such as the transceiver. Solid-state scanning mechanisms include optical phased arrays based steering, and flash LiDAR based steering. In some embodiments, because solid-state scanning mechanisms do not physically move macroscopic components, the steering performed by a solid-state scanning mechanism may be referred to as effective steering. A LiDAR system using solid-state scanning may also be referred to as a non-mechanical scanning or simply non-scanning LiDAR system (a flash LiDAR system is an exemplary non-scanning LiDAR system).

Steering mechanism 340 can be used with the transceiver (e.g., transmitter 320 and optical receiver and light detector 330) to scan the FOV for generating an image or a 3D point cloud. As an example, to implement steering mechanism 340, a two-dimensional mechanical scanner can be used with a single-point or several single-point transceivers. A single-point transceiver transmits a single light beam or a small number of light beams (e.g., 2-8 beams) to the steering mechanism. A two-dimensional mechanical steering mechanism comprises, for example, polygon mirror(s), oscillating mirror(s), rotating prism(s), rotating tilt mirror surface(s), or a combination thereof. In some embodiments, steering mechanism 340 may include non-mechanical steering mechanism(s) such as solid-state steering mechanism(s). For example, steering mechanism 340 can be based on tuning wavelength of the laser light combined with refraction effect, and/or based on reconfigurable grating/phase array. In some embodiments, steering mechanism 340 can use a single scanning device to achieve two-dimensional scanning or two devices combined to realize two-dimensional scanning.

As another example, to implement steering mechanism 340, a one-dimensional mechanical scanner can be used with an array or a large number of single-point transceivers. Specifically, the transceiver array can be mounted on a rotating platform to achieve 360-degree horizontal field of view. Alternatively, a static transceiver array can be combined with the one-dimensional mechanical scanner. A one-dimensional mechanical scanner comprises polygon mirror(s), oscillating mirror(s), rotating prism(s), rotating tilt mirror surface(s) for obtaining a forward-looking horizontal field of view. Steering mechanisms using mechanical scanners can provide robustness and reliability in high volume production for automotive applications.

As another example, to implement steering mechanism 340, a two-dimensional transceiver can be used to generate a scan image or a 3D point cloud directly. In some embodiments, a stitching or micro shift method can be used to improve the resolution of the scan image or the field of view being scanned. For example, using a two-dimensional transceiver, signals generated at one direction (e.g., the horizontal direction) and signals generated at the other direction (e.g., the vertical direction) may be integrated, interleaved, and/or matched to generate a higher or full resolution image or 3D point cloud representing the scanned FOV.

Some implementations of steering mechanism 340 comprise one or more optical redirection elements (e.g., mirrors or lens) that steer return light signals (e.g., by rotating, vibrating, or directing) along a receive path to direct the return light signals to optical receiver and light detector 330. The optical redirection elements that direct light signals along the transmitting and receiving paths may be the same components (e.g., shared), separate components (e.g., dedicated), and/or a combination of shared and separate components. This means that in some cases the transmitting and receiving paths are different although they may partially overlap (or in some cases, substantially overlap).

With reference still to FIG. 3, LiDAR system 300 further comprises control circuitry 350. Control circuitry 350 can be configured and/or programmed to control various parts of the LiDAR system 300 and/or to perform signal processing. In a typical system, control circuitry 350 can be configured and/or programmed to perform one or more control operations including, for example, controlling laser source 310 to obtain desired laser pulse timing, repetition rate, and power; controlling steering mechanism 340 (e.g., controlling the speed, direction, and/or other parameters) to scan the FOV and maintain pixel registration/alignment; controlling optical receiver and light detector 330 (e.g., controlling the sensitivity, noise reduction, filtering, and/or other parameters) such that it is an optimal state; and monitoring overall system health/status for functional safety.

Control circuitry 350 can also be configured and/or programmed to perform signal processing to the raw data generated by optical receiver and light detector 330 to derive distance and reflectance information, and perform data packaging and communication to vehicle perception and planning system 220 (shown in FIG. 2). For example, control circuitry 350 determines the time it takes from transmitting a light pulse until a corresponding return light pulse is received; determines when a return light pulse is not received for a transmitted light pulse; determines the direction (e.g., horizontal and/or vertical information) for a transmitted/return light pulse; determines the estimated range in a particular direction; and/or determines any other type of data relevant to LiDAR system 300.

LiDAR system 300 can be disposed in a vehicle, which may operate in many different environments including hot or cold weather, rough road conditions that may cause intense vibration, high or low humidifies, dusty areas, etc. Therefore, in some embodiments, optical and/or electronic components of LiDAR system 300 (e.g., optics in transmitter 320, optical receiver and light detector 330, and steering mechanism 340) are disposed or configured in such a manner to maintain long term mechanical and optical stability. For example, components in LiDAR system 300 may be secured and sealed such that they can operate under all conditions a vehicle may encounter. As an example, an anti-moisture coating and/or hermetic sealing may be applied to optical components of transmitter 320, optical receiver and light detector 330, and steering mechanism 340 (and other components that are susceptible to moisture). As another example, housing(s), enclosure(s), and/or window can be used in LiDAR system 300 for providing desired characteristics such as hardness, ingress protection (IP) rating, self-cleaning capability, resistance to chemical and resistance to impact, or the like. In addition, efficient and economical methodologies for assembling LiDAR system 300 may be used to meet the LiDAR operating requirements while keeping the cost low.

It is understood by a person of ordinary skill in the art that FIG. 3 and the above descriptions are for illustrative purposes only, and a LiDAR system can include other functional units, blocks, or segments, and can include variations or combinations of these above functional units, blocks, or segments. For example, LiDAR system 300 can also include other components not depicted in FIG. 3, such as power buses, power supplies, LED indicators, switches, etc. Additionally, other connections among components may be present, such as a direct connection between light source 310 and optical receiver and light detector 330 so that light detector 330 can accurately measure the time from when light source 310 transmits a light pulse until light detector 330 detects a return light pulse.

These components shown in FIG. 3 are coupled together using communications paths 312, 314, 322, 332, 342, 352, and 362. These communications paths represent communication (bidirectional or unidirectional) among the various LiDAR system components but need not be physical components themselves. While the communications paths can be implemented by one or more electrical wires, busses, or optical fibers, the communication paths can also be wireless channels or open-air optical paths so that no physical communication medium is present. For example, in one exemplary LiDAR system, communication path 314 includes one or more optical fibers; communication path 352 represents an optical path; and communication paths 312, 322, 342, and 362 are all electrical wires that carry electrical signals. The communication paths can also include more than one of the above types of communication mediums (e.g.,

they can include an optical fiber and an optical path, or one or more optical fibers and one or more electrical wires).

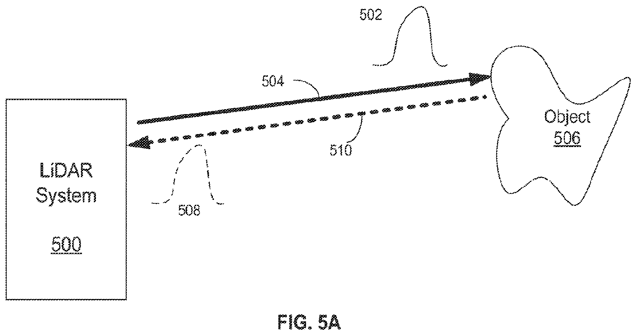

As described above, some LiDAR systems use the time-of-flight (TOF) of light signals (e.g., light pulses) to determine the distance to objects in a light path. For example, with reference to FIG. 5A, an exemplary LiDAR system 500 includes a laser light source (e.g., a fiber laser), a steering system (e.g., a system of one or more moving mirrors), and a light detector (e.g., a photon detector with one or more optics). LiDAR system 500 can be implemented using, for example, LiDAR system 300 described above. LiDAR system 500 transmits a light pulse 502 along light path 504 as determined by the steering system of LiDAR system 500. In the depicted example, light pulse 502, which is generated by the laser light source, is a short pulse of laser light. Further, the signal steering system of the LiDAR system 500 is a pulsed-signal steering system. However, it should be appreciated that LiDAR systems can operate by generating, transmitting, and detecting light signals that are not pulsed and derive ranges to an object in the surrounding environment using techniques other than time-of-flight. For example, some LiDAR systems use frequency modulated continuous waves (i.e., "FMCW"). It should be further appreciated that any of the techniques described herein with respect to time-of-flight based systems that use pulsed signals also may be applicable to LiDAR systems that do not use one or both of these techniques.

Referring back to FIG. 5A (e.g., illustrating a time-of-flight LiDAR system that uses light pulses), when light pulse 502 reaches object 506, light pulse 502 scatters or reflects to generate a return light pulse 508. Return light pulse 508 may return to system 500 along light path 510. The time from when transmitted light pulse 502 leaves LiDAR system 500 to when return light pulse 508 arrives back at LiDAR system 500 can be measured (e.g., by a processor or other electronics, such as control circuitry 350, within the LiDAR system). This time-of-flight combined with the knowledge of the speed of light can be used to determine the range/distance from LiDAR system 500 to the portion of object 506 where light pulse 502 scattered or reflected.

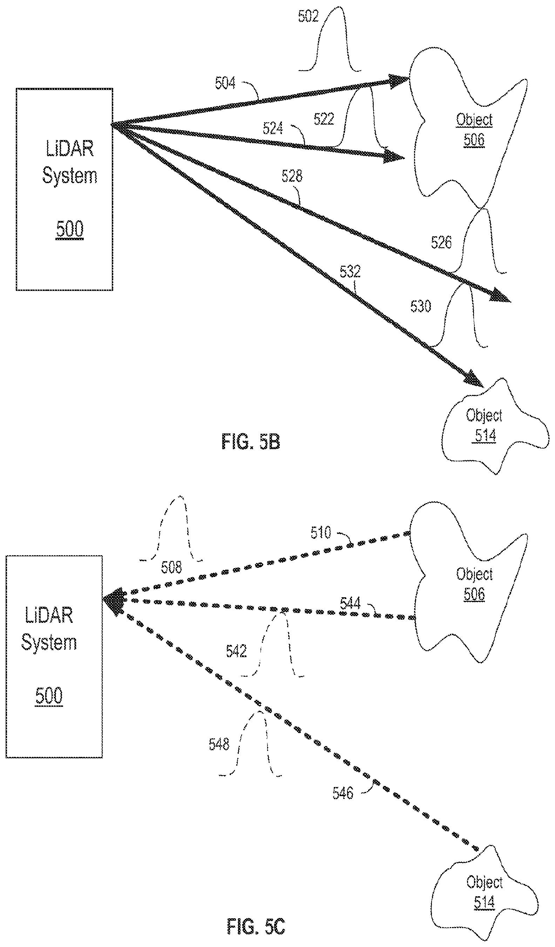

By directing many light pulses, as depicted in FIG. 5B, LiDAR system 500 scans the external environment (e.g., by directing light pulses 502, 522, 526, 530 along light paths 504, 524, 528, 532, respectively). As depicted in FIG. 5C, LiDAR system 500 receives return light pulses 508, 542, 548 (which correspond to transmitted light pulses 502, 522, 530, respectively). Return light pulses 508, 542, and 548 are generated by scattering or reflecting the transmitted light pulses by one of objects 506 and 514. Return light pulses 508, 542, and 548 may return to LiDAR system 500 along light paths 510, 544, and 546, respectively. Based on the direction of the transmitted light pulses (as determined by LiDAR system 500) as well as the calculated range from LiDAR system 500 to the portion of objects that scatter or reflect the light pulses (e.g., the portions of objects 506 and 514), the external environment within the detectable range (e.g., the field of view between path 504 and 532, inclusively) can be precisely mapped or plotted (e.g., by generating a 3D point cloud or images).

If a corresponding light pulse is not received for a particular transmitted light pulse, then it may be determined that there are no objects within a detectable range of LiDAR system 500 (e.g., an object is beyond the maximum scanning distance of LiDAR system 500). For example, in FIG. 5B, light pulse 526 may not have a corresponding return light pulse (as illustrated in FIG. 5C) because light pulse 526 may not produce a scattering event along its transmission path 528 within the predetermined detection range. LiDAR system 500, or an external system in communication with LiDAR system 500 (e.g., a cloud system or service), can interpret the lack of return light pulse as no object being disposed along light path 528 within the detectable range of LiDAR system 500.

In FIG. 5B, light pulses 502, 522, 526, and 530 can be transmitted in any order, serially, in parallel, or based on other timings with respect to each other. Additionally, while FIG. 5B depicts transmitted light pulses as being directed in one dimension or one plane (e.g., the plane of the paper), LiDAR system 500 can also direct transmitted light pulses along other dimension(s) or plane(s). For example, LiDAR system 500 can also direct transmitted light pulses in a dimension or plane that is perpendicular to the dimension or plane shown in FIG. 5B, thereby forming a 2-dimensional transmission of the light pulses. This 2-dimensional transmission of the light pulses can be point-by-point, line-by-line, all at once, or in some other manner. A point cloud or image from a 1-dimensional transmission of light pulses (e.g., a single horizontal line) can generate 2-dimensional data (e.g., (1) data from the horizontal transmission direction and (2) the range or distance to objects). Similarly, a point cloud or image from a 2-dimensional transmission of light pulses can generate 3-dimensional data (e.g., (1) data from the horizontal transmission direction, (2) data from the vertical transmission direction, and (3) the range or distance to objects). In general, a LiDAR system performing an n-dimensional transmission of light pulses generates ($n$+1) dimensional data. This is because the LiDAR system can measure the depth of an object or the range/distance to the object, which provides the extra dimension of data. Therefore, a 2D scanning by a LiDAR system can generate a 3D point cloud for mapping the external environment of the LiDAR system.

The density of a point cloud refers to the number of measurements (data points) per area performed by the LiDAR system. A point cloud density relates to the LiDAR scanning resolution. Typically, a larger point cloud density, and therefore a higher resolution, is desired at least for the region of interest (ROI). The density of points in a point cloud or image generated by a LiDAR system is equal to the number of pulses divided by the field of view.

In some embodiments, the field of view can be fixed. Therefore, to increase the density of points generated by one set of transmission-receiving optics (or transceiver optics), the LiDAR system may need to generate a pulse more frequently. In other words, a light source with a higher pulse repetition rate (PRR) is needed. On the other hand, by generating and transmitting pulses more frequently, the farthest distance that the LiDAR system can detect may be limited. For example, if a return signal from a distant object is received after the system transmits the next pulse, the return signals may be detected in a different order than the order in which the corresponding signals are transmitted, thereby causing ambiguity if the system cannot correctly correlate the return signals with the transmitted signals.

To illustrate, consider an exemplary LiDAR system that can transmit laser pulses with a repetition rate between 500 kHz and 1 MHz. Based on the time it takes for a pulse to return to the LiDAR system and to avoid mix-up of return pulses from consecutive pulses in a conventional LiDAR design, the farthest distance the LiDAR system can detect may be 300 meters and 150 meters for 500 kHz and 1 MHz, respectively. The density of points of a LiDAR system with 500 kHz repetition rate is half of that with 1 MHz. Thus, this example demonstrates that, if the system cannot correctly correlate return signals that arrive out of order, increasing the repetition rate from 500 kHz to 1 MHz (and thus improving the density of points of the system) may reduce the detection range of the system. Various techniques are used to mitigate the tradeoff between higher PRR and limited detection range. For example, multiple wavelengths can be used for detecting objects in different ranges. Optical and/or signal processing techniques are also used to correlate between transmitted and return light signals.

Various systems, apparatus, and methods described herein may be implemented using digital circuitry, or using one or more computers using well-known computer processors, memory units, storage devices, computer software, and other components. Typically, a computer includes a processor for executing instructions and one or more memories for storing instructions and data. A computer may also include, or be coupled to, one or more mass storage devices, such as one or more magnetic disks, internal hard disks and removable disks, magneto-optical disks, optical disks, etc.

Various systems, apparatus, and methods described herein may be implemented using computers operating in a client-server relationship. Typically, in such a system, the client computers are located remotely from the server computers and interact via a network. The client-server relationship may be defined and controlled by computer programs running on the respective client and server computers. Examples of client computers can include desktop computers, workstations, portable computers, cellular smartphones, tablets, or other types of computing devices.

Various systems, apparatus, and methods described herein may be implemented using a computer program product tangibly embodied in an information carrier, e.g., in a non-transitory machine-readable storage device, for execution by a programmable processor; and the method processes and steps described herein may be implemented using one or more computer programs that are executable by such a processor. A computer program is a set of computer program instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

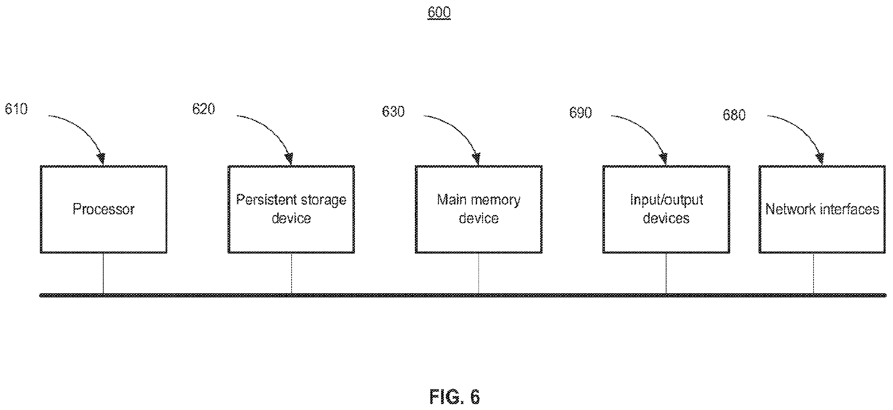

A high-level block diagram of an exemplary apparatus that may be used to implement systems, apparatus and methods described herein is illustrated in FIG. 6. Apparatus 600 comprises a processor 610 operatively coupled to a persistent storage device 620 and a main memory device 630. Processor 610 controls the overall operation of apparatus 600 by executing computer program instructions that define such operations. The computer program instructions may be stored in persistent storage device 620, or other computer-readable medium, and loaded into main memory device 630 when execution of the computer program instructions is desired. For example, processor 610 may be used to implement one or more components and systems described herein, such as control circuitry 350 (shown in FIG. 3), vehicle perception and planning system 220 (shown in FIG. 2), and vehicle control system 280 (shown in FIG. 2). Thus, the method steps described herein can be defined by the computer program instructions stored in main memory device 630 and/or persistent storage device 620 and controlled by processor 610 executing the computer program instructions. For example, the computer program instructions can be implemented as computer executable code programmed by one skilled in the art to perform an algorithm defined by the method steps described herein. Accordingly, by executing the computer program instructions, the processor 610 executes an algorithm defined by the methods of FIGS. 3-5 and other method steps described herein. Apparatus 600 also includes one or more network interfaces 680 for communicating with other devices via a network. Apparatus 600 may also include one or more input/output devices 690 that enable user interaction with apparatus 600 (e.g., display, keyboard, mouse, speakers, buttons, etc.).

Processor 610 may include both general and special purpose microprocessors and may be the sole processor or one of multiple processors of apparatus 600. Processor 610 may comprise one or more central processing units (CPUs), and one or more graphics processing units (GPUs), which, for example, may work separately from and/or multi-task with one or more CPUs to accelerate processing, e.g., for various image processing applications described herein. Processor 610, persistent storage device 620, and/or main memory device 630 may include, be supplemented by, or incorporated in, one or more application-specific integrated circuits (ASICs) and/or one or more field programmable gate arrays (FPGAs).

Persistent storage device 620 and main memory device 630 each comprise a tangible non-transitory computer readable storage medium. Persistent storage device 620, and main memory device 630, may each include high-speed random access memory, such as dynamic random access memory (DRAM), static random access memory (SRAM), double data rate synchronous dynamic random access memory (DDR RAM), or other random access solid state memory devices, and may include non-volatile memory, such as one or more magnetic disk storage devices such as internal hard disks and removable disks, magneto-optical disk storage devices, optical disk storage devices, flash memory devices, semiconductor memory devices, such as erasable programmable read-only memory (EPROM), electrically erasable programmable read-only memory (EEPROM), compact disc read-only memory (CD-ROM), digital versatile disc read-only memory (DVD-ROM) disks, or other non-volatile solid state storage devices.

Input/output devices 690 may include peripherals, such as a printer, scanner, display screen, etc. For example, input/output devices 690 may include a display device such as a cathode ray tube (CRT), plasma or liquid crystal display (LCD) monitor for displaying information to a user, a keyboard, and a pointing device such as a mouse or a trackball by which the user can provide input to apparatus 600.

Any or all of the functions of the systems and apparatuses discussed herein may be performed by processor 610, and/or incorporated in, an apparatus or a system such as LiDAR system 300. Further, LiDAR system 300 and/or apparatus 600 may utilize one or more neural networks or other deep-learning techniques performed by processor 610 or other systems or apparatuses discussed herein.

One skilled in the art will recognize that an implementation of an actual computer or computer system may have other structures and may contain other components as well, and that FIG. 6 is a high-level representation of some of the components of such a computer for illustrative purposes.

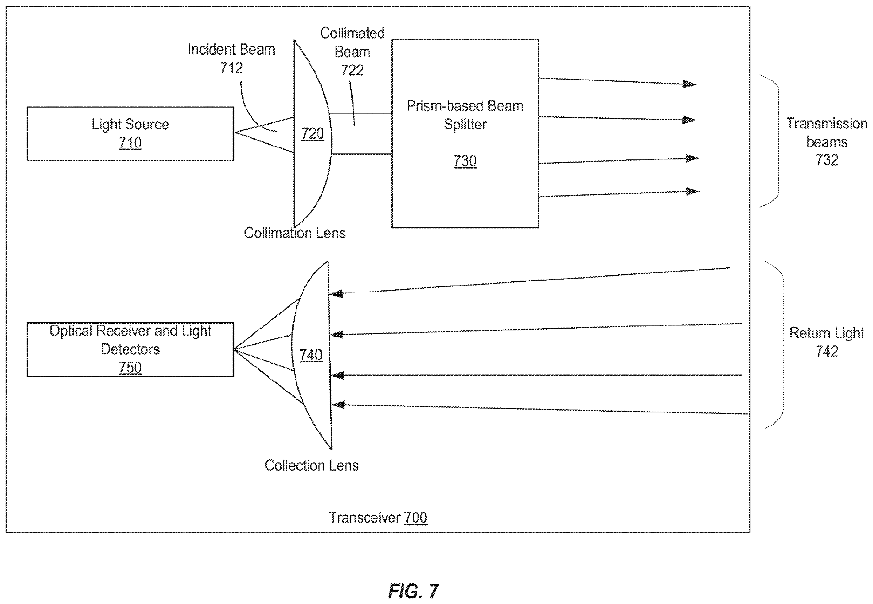

FIG. 7 is a block diagram illustrating an example transceiver 700 of a LiDAR system. In some embodiments, transceiver 700 comprises a light source 710, a collimation lens 720, an optical prism-based beam splitter 730, a collection lens 740, and optical receiver and light detectors 750. In some embodiments, light source 710, collimation lens 720, and optical prism-based beam splitter 730 are components of a transmitter and therefore form at least a part of the transmitting light path. Collection lens 740 and optical receiver and light detectors 750 are components of a receiver, and therefore, form at least a part of the receiving light path.

As shown in FIG. 7, light source 710 provides an incident light beam 712. Light source 710 can be implemented using light source 310 or light source 400, described above. In some embodiments, incident light beam 712 is a single light beam. The collimation lens 720 receives the incident light beam 712 and forms collimated light beam 722. The collimated light beam 722 has much smaller divergence compared to incident light beam 712, which allows it to reach further distance with concentrated energy. Collimation lens 720 can be, for example, a lens and/or mirror with a predetermined focal length.

With reference still to FIG. 7, the collimated light beam 722 is directed to prism-based beam splitter 730, which forms a plurality of transmission light beams 732. The transmission light beams are also referred to as the output light beams of the prism-based beam splitter 730. Therefore, prism-based beam splitter 730 can divide the one input beam 722 to form multiple output beams 732. Thus, prism-based beam splitter 730 can be used to implement multiple transmitter channels. A transmitter channel is configured to communicate light signals from, for example, a light source to other optical components (e.g., a steering mechanism) or to an FOV. In one embodiment, a transmitter channel comprises at least a part of prism-based beam splitter 730. Prism-based beams splitter 730, as described above, can form multiple transmission beams 732 used for multiple transmitter channels. While FIG. 7 shows four transmission beams 732, it is understood that optical prism-based beam splitter 730 can be configured to generate any number of transmission beams used for any number of transmitter channels. In one example, light source 710, collimation lens 720, and beam splitter 730 may be integrated as an assembly or may be discrete components of the transceiver 700.

In some embodiments, multiple transmission light beams 732 are directed to a steering mechanism (shown in FIG. 3) and/or an FOV for illuminate one or more objects in the FOV. As described in greater detail below, prism-based beam splitter 730 can be configured such that neighboring transmission light beams 732 form desired inter beam angles. In one example, an inter beam angle between two adjacent transmission light beams is about 1.12 degrees. The inter beam angle represents an angular channel spacing between two transmitter channels that provide the transmission light beams. The angular channel spacing is a parameter that measures or represents the degree of angular separation between the transmission light beams 732, which are the light beams transmitted to scan an FOV (via a steering mechanism). A desired angular channel spacing can be obtained by properly configuring the prism-based beam splitter 730, as described in more detail below.

In some embodiments, the angular channel spacing is determined based on one or more of a required LiDAR scan resolution, a region-of-interest (ROI) requirement, and a scan range of the field-of-view. For example, a smaller angular channel spacing (and/or a larger number of transmitter channels) may be required for a higher scanning resolution. An ROI may need to be scanned with a higher resolution while a non-ROI may be scanned with a lower resolution. Therefore, the scanning flexibility and performance of the LiDAR system can be improved by using multiple transmitter channels having a properly configured angular channel spacing.

Based on the transmission light beams 732 that are scanned to the FOV by a steering mechanism, return light can be formed when one or more objects in the FOV scatter and/or reflect one or more of the transmission light beams. In FIG. 7, for instance, return light 742 may be received by collection lens 740 (via steering mechanism) at different receiving angles corresponding to the angles of transmission light beams. Return light 742 is directed by collection lens 740 to optical receiver and light detector 750. In some embodiments, the collection lens 740 is physically positioned on the side of (and close to) the collimation lens 720 to optimize the optical aperture for collection. It is understood that collection lens 740 can be position anywhere to operate with a steering mechanism to maximize the collection of return light 742. Optical receiver and light detector 750 can be implemented using, for example, optical receiver and light detector 330 shown in FIG. 3. In some embodiments, a steering mechanism (not shown in FIG. 7) is disposed to receive and scan the transmission light beams 732 provided by prism-based beam splitter 730 and to receive and redirect return light 742 to collection lens 740. The steering mechanism can be implemented using steering mechanism 340 shown in FIG. 3.

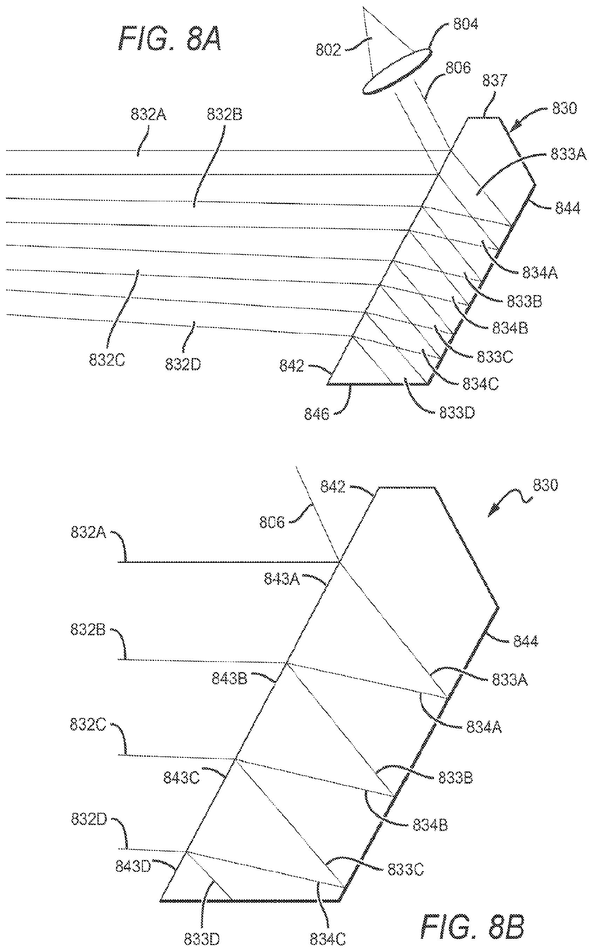

FIGs. 8A and 8B are diagrams illustrating an example prism-based beam splitter 830 and its associated transmitter optical path according to some embodiments. Prism-based beam splitter 830 can be used to implement prism-based beam splitter 730 shown in FIG. 7. With reference to FIG. 8A, a collimation lens 804 receives incident light beam 802 and forms collimated light beam 806. Collimated light beam 806 is directed to an optical prism-based beam splitter 830. Beam splitter 830 comprises multiple facets including a facet 842 (sometimes referred to as a front facet or a first facet) for receiving collimated light beam 806 and a facet 844 (sometimes referred to as a back facet or a second facet) for reflecting internal beams. Facets 842 and 844 are opposing facets of beam splitter 830. In some embodiments, facets 842 and 844 are the two main facets that facilitate the beam splitting to form multiple output beams 832 (e.g., 832A-D as shown in FIG. 8A) based on the collimated light beam 806.

The optical characteristics of the facets 842 and 844 are properly configured to perform beam splitting. In one embodiment, one or more partial reflection coatings are disposed on facet 842. A partial reflection coating facilitates the facet 842 to reflect a part of an incident light beam and allow another part of the incident light beam to pass through. A partial reflection coating comprises, for example, one or more layers of optical thin films with properly configured optical characteristics. The optical characteristics of a partial reflection coating include at least one of optical reflection capabilities or optical transmission capabilities. For example, a partial reflection coating may have about 50% reflectivity and about 50% transmissivity. Another partial reflection coating may have about 30% reflectivity and about 70% transmissivity. It is appreciated that a partial reflection coatings can be configured to have any desired reflectivity and transmissivity. As described in greater detail below, different portions of facet 842 can have different partial reflection coatings that have different reflectivity and/or transmissivities.

Facet 844, in one embodiment, can be configured to have a high reflection coating. A high reflection coating has a high reflectivity (e.g., greater than about 90-95%). In some examples, facet 844 can have a high reflection coating that has about 100% reflectivity. Thus, in these examples, all or substantially all incident light beam to facet 844 can be reflected to facilitate forming output beams 832. Because facet 844 has a high reflection coating, almost no light passes through facet 844. In other examples, facet 844 may have partial reflection coatings too. For instance, if additional output beams are desired, facet 844 can be coated with partial reflection coatings such that one or more beams passes through facet 844 to form one or more additional output light beams (not shown). The additional output light beams may be directed to a different direction than the direction of the output light beams 832. The output light beams are sometimes also referred to as transmission light beams because the optical beam splitter in the present disclosure is used in a transmitter of a LiDAR system.

With reference still to FIG. 8A, in one example, output light beams 832A-D are formed in the following manner. Facet 842 of beam splitter 830 receives collimated light beam 806 at a preconfigured beam incident angle. The beam incident angle is the angle between the collimated light beam 806 and the normal direction of facet 842 (e.g., the angle between beam 806 and a direction perpendicular to the facet 842). Because facet 842 is coated with one or more partial reflection coatings, a portion of collimated light beam 806 is reflected by facet 842 to form output beam 832A and another portion of collimated light beam 806 travels (e.g., refracts) into beam splitter 830 to form internal light beam 833A. Internal light beam 833A travels inside beam splitter 830 toward facet 844. In one embodiment, facet 844 is coated with a high reflection coating and therefore all or substantially all (e.g., greater than 95%) internal beam 833A is reflected to form internal light beam 834A. Internal light beam 834A travels toward facet 842. Due to the one or more partial reflection coatings disposed on facet 842, a portion of internal light beam 834A travels through facet 842 to form output beam 832B and another portion of internal light beam 834A is reflected to form internal light beam 833B.

The light path can continue in a similar manner to form the other output light beams. That is, internal light beam 833B travels inside beam splitter 830 toward facet 844. Facet 844 reflects all or substantially all internal light beam 833B to form internal light beam 834B, which travels toward facet 832. Similarly, due to the partial reflection coatings, a portion of internal light beam 834B travels through facet 842 to form output light beam 832C and another portion of internal light beam 834B is reflected to form internal light beam 833C. Finally, internal light beam 833C is reflected to form internal light beam 834C, which in turn forms output light beam 832D (and optionally another internal light beam 833D).

In the embodiment shown in FIG. 8A, beam splitter 830 is configured to form four output beams 832A-D in the above-described manner. In one example, the portion of the facet 842 that forms output light beam 832D is coated with an anti-reflection coating, rather than a partial reflection coating. As a result, internal light beam 833D may or may not exist. It can also be some residual light that has a very small or insignificant beam intensity (e.g., less than 1 % of the collimated light beam 806). Internal light beam 833D may be directed to a facet 846 of beam splitter 830. In some embodiments, facet 846 may have no optical coatings such that light beam 833D may just travel through facet 846 and may simply be ignored or discarded. In some embodiments, facet 846 may be coated with a high absorption coating such that all or substantially all (e.g., greater than 95%) internal light beam 833D is absorbed.

While FIG. 8A illustrates that the example beam splitter 830 forms four output beams, it is understood that prism-based beam splitter 830 can be configured to form any number of output beams 832 (fewer than or greater than four) depending on the number of transmitter channels required. Further, prism-based beam splitter 830 can also be configured to form additional output light beams at a direction that is generally the same as or different from output light beams 832. For example, if facet 844 is also coated with one or more partial reflection coatings (rather than the high reflection coating), a portion of each internal light beams 833A-C can thus pass (e.g., refracts) through facet 844 such that one or more additional output light beams (not shown) can be formed. These additional output light beams are directed to different directions than output light beams 832 (e.g., to the lower right direction in FIG. 8A). It is understood that the additional output beams can be redirected in any manner that is desired.

FIG. 8B is a diagram illustrating the same example optical prism-based beam splitter 830 and the associated optical paths in greater details. The optical path shown in FIG. 8B is similar to that shown in FIG. 8A. That is, collimated light beam 806 is directed to facet 842 and multiple output beams 832A-D are formed though partial reflection at facet 842. In some embodiments, the prism-based beam splitter 830 can be configured such that multiple output beams have equal or substantially equal beam intensities. As described above, the output beams are used as transmission light beams in multiple transmitter channels of the LiDAR system. Therefore, it is often desirable to equalize beam intensities among the multiple transmission light beams such that the return light is generated with consistent signal intensities across the multiple transmitter channels. The consistent signal intensities of the return light across multiple transmitter channels in turn improves the consistency of the data derived from the return light. Such data may include the object distance calculations. Using the four output beams 832A-D as an example, the beam intensity of each of these beams should be about 25% of the beam intensity of collimated light beam 806, which is an input light beam to the optical beam splitter 830.

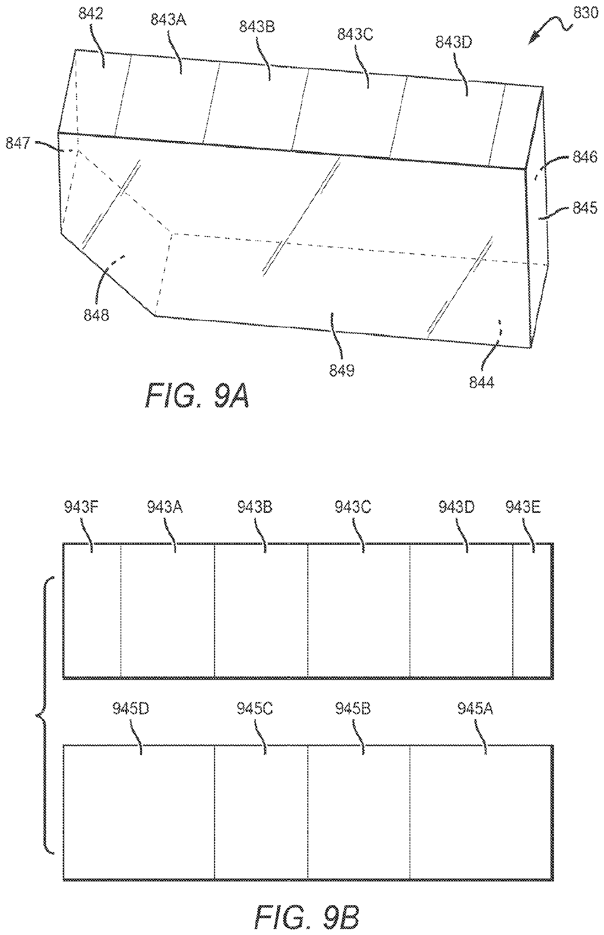

In one embodiment, to equalize the beam intensities, the optical coatings disposed on different portions of facet 842 are customized to have different optical characteristics. FIG. 9A illustrates a perspective view of the same example optical prism-based beam splitter 830 as shown in FIGs. 8A and 8B. FIGs. 8B and 9A illustrate that facet 842 includes a plurality of portions 843A-D. In some embodiments, each of portions 843A-D is disposed with a respective optical coating. At least two of the plurality of optical coatings disposed on facet 842 have different optical characteristics. The optical characteristics may include optical reflection capabilities and/or optical transmission capabilities. In some embodiments, some of the optical coatings are partial reflection coatings with customized reflection capabilities and/or transmission capabilities. For instance, with reference to FIGs. 8B and 9A, the portions 843A-C of facet 842 may each have a partial reflection coating. Portion 843A of facet 842 receives collimated light beam 806 and forms output beam 832A and internal light beam 833A. Collimated light beam 806 is the input beam to the beam splitter 830 and has a certain beam intensity. Because beam splitter 830 is a passive device, all output light beams 832A-D have beam intensities that are less than the beam intensity of the collimated light beam 806. In other words, the beam intensity of the collimated light beam 806 is divided to the output light beams 832A-D. To equalize the beam intensities among the output light beams, the beam intensity of the input beam should be equally divided in general. As shown in FIG. 8B, the beam intensity of output light beam 832A should be about 25% of the beam intensity of collimated light beam 806; and the beam intensity of internal beam 833A should be about 75%. Thus, the optical coating of portion 843A should have about 25% reflectivity and about 75% transmissivity.

With reference still to FIGs. 8B an 9A, internal light beam 833A is reflected by facet 844 to form internal light beam 834A, which travels toward facet 842. Facet 844 is coated with a high reflection coating and therefore all or substantially all internal light beam 833A is reflected. The loss of beam intensity at facet 844 thus can be minimum or insignificant. Assuming, for example, all internal light beam 833A is reflected to form internal light beam 834A, the beam intensity of internal beam 834A is thus about 75% of collimated light beam 806. Portion 834B of facet 842 receives internal light beam 834A and forms output beam 832B and another internal light beam 833B. Thus, the beam intensity of internal light beam 834A (i.e., 75%) is divided between the output beam 832B and internal light beam 833B. The beam intensity of output light beam 832B should be equal or substantially equal to that of output light beam 832A. Therefore, the beam intensity of output light beam 832B should be about 25% of the beam intensity of collimated light beam 806; and the beam intensity of internal light beam 833B should be about 50%. Thus, the optical coating of portion 843B should have about 33% (e.g., 25/75) reflectivity and about 67% (e.g., 50/75) transmissivity.

Continuing with this example, assuming all or substantially all internal light beam 833B is reflected by facet 844 to form internal light beam 834B, the beam intensity of internal light beam 834B is thus 50% of that of collimated light beam 806. Internal light beam 834B travels toward portion 843C of facet 842. Portion 843C of facet 842 receives internal light beam 843B and forms output light beam 832C and another internal light beam 833C. Thus, the beam intensity of internal light beam 843B is divided between output light beam 832C and internal light beam 833C. The beam intensity of output light beam 832C should be equal or substantially equal to that of output light beams 832A or 832B. The beam intensity of output light beam 832C should thus be about 25% of the beam intensity of collimated light beam 806; and the beam intensity of internal light beam 833C should be about 25%. Thus, the optical coating of portion 843C should have about 50% (e.g., 25/50) reflectivity and about 50% (e.g., 25/50) transmissivity.

In the above example, the optical coatings of portions 843A, 843B, and 843C of facet 842 have different optical characteristics. For instance, as described above, portion 843A has a partial reflection coating with about 25% reflectivity and 75% transmissivity; portion 843B has a partial reflection coating with about 33% reflectivity and 67% transmissivity; and portion 843C has a partial reflection coating with about 50% reflectivity and 50% transmissivity. The different optical characteristics of the different portions of facet 842 enable equalizing the beam intensities of the output light beams.

With reference still to FIG. 8B and continuing with the above example, assuming again all or substantially all internal light beam 833C is reflected by facet 844 to form internal light beam 834C, the beam intensity of light beam 834C is thus 25% of that of collimated light beam 806. Internal light beam 834C travels toward portion 843D of facet 842. Portion 843D of facet 842 receives internal light beam 834C and forms output beam 832D. The beam intensity of output beam 832D should be about 25% of the beam intensity of collimated light beam 806.

Thus, all or substantially all internal light beam 834C should form output light beam 832D. Therefore, the optical coating of portion 843D should have about 100% transmissivity and no reflectivity. In some examples, the optical coating of portion 843D is an anti-reflection coating with reflectivity less than about 0.5%. FIG. 8B shows that in some examples, there might be some residual internal light beam 833D formed. The beam intensity of the beam 833D can be very small and insignificant.

All the above-described optical coatings of facet 842 can be configured to have the required reflectivity and/or transmissivity at a particular wavelength or wavelength range. For instance, the optical characteristics of these optical coating can be configured to have the desired reflectivity and/or transmissivity at the 1550nm wavelength (or at any other desired wavelength or wavelength range). In some embodiments, a partial reflection coating used for facet 842 is disposed on a ZnSe substrate or glass substrate and comprises one or more semiconductor-oxide (e.g., SiO2, ZnO, or the like) based thin film layers. These thin film layers can be stacked with one another to provided desired optical characteristics. The thickness of each thin film layer can also be customized. In some embodiments, the anti-reflection coating (e.g., using for portion 834D) comprises a graded-index (GRIN) anti-reflective coating, a magnesium fluoride and/or fluoropolymer based anti-reflective coatings, multiple layer interference coatings (e.g., alternating layers of low-index material like silica and a higher-index material), absorbing coatings (e.g., titanium nitride and niobium nitride based coatings), or the like.

In the above example, the four output light beams 832A-D each ideally should have a beam intensity of about 25% of collimated light beam 806, which is the input beam to beam splitter 830). In reality, the beam intensity of the output light beams 832A-D may vary (e.g., +/-2%). The variation of the beam intensities can be caused by one or more factors. For example, the optical characteristics of the optical coatings of each portions 843A-D may deviate from their design values; the reflectivity of the facet 844 (e.g., the back facet) may not be 100%; there are interferences from other light sources, etc.

With reference to FIG. 9A, the portions 843A-D of facet 842 can have the same dimensions or different dimensions. In one embodiment, portions 843A and 843B may each have a length that is slightly larger than that of portions 843C and 843D. In another embodiment, all portions 843A-843D have the same length. All portions 843A-D may have the same width (e.g., the width of facet 842). For example, the lengths of the portions 843A-D may vary from about 3.8mm to about 4.2mm, and the width of the portions 843A-D may be about 5mm. The dimensions of the portions 843A-D of facet 842 are configured to be sufficiently large to accommodate the light beams while maintaining sufficient distances between the neighboring light beams. In one embodiment, the diameter of the light beam (e.g., an output light beam or an internal light beam that intersect with the portions of the facet 842) is about 0.8mm. The distances between neighboring light beams should be more than, for example, 2mm. Thus, the lengths of portions 843A-D are configured to account for such a beam size and the neighboring beam distance.

FIG. 9B illustrates two examples of a front facet (e.g., facet 842 shown in FIGs. 8A, 8B, and 9A) of an optical prism-based beam splitter according to some embodiments. In FIG. 9B, similar to portions 843A-D of facet 842 described above, portions 943A-D are used to form light beams (e.g., by reflecting a portion of an input beam and transmitting another portion). In one example, portions 943A-D are consecutive portions without gaps between them. Portions 943A-D are disposed with respective optical coatings have respective optical characteristics, similar to those described above for portions 843A-D. When depositing the optical coatings on each portion, the edge area of the portion may not have the exact same optical characteristics as the center area, due to the coating process variations or inaccuracies. Thus, there may be transition zones between the two neighboring portions (e.g., between portions 943A and 943B). As discussed above, the two neighboring portions may have different optical characteristics, and therefore, the transitions zones may have mixed optical characteristics that are different from the center areas of any of the two neighboring portions. Thus, the transition zones may not be used to form beams. The transition zones typically may need to be minimized or eliminated. In some embodiments, the transition zones are restricted to be less than 250μm. In some embodiments, the dimensions of the transition zones are taking into account when determining the proper dimensions of the portions 943A-D. For example, the dimensions of each of the portions 943A-D are configured to be sufficiently large such that the light beams intersecting the portion are not positioned in the transition zones under all operational conditions.

FIG. 9B further illustrates that in some embodiments, portions 943A-D do not occupy the entire area of the facet. The facet shown in the top example of FIG. 9B includes portions 943E and 943F at the two ends of the facet, in addition to portions 943A-D. These two portions 943E-F may not have any optical coatings. In some embodiments, as shown in the bottom example of FIG. 9B, portions 945A-D are used to receive and form light beams (e.g., reflect a portion and transmit another portion), similar to portions 843A-D described above. In this example, portion 945A-D occupy the entire area of the facet, by extending portions 945A and 945D to the end of the facet. Thus, these two portions 945A and 945D have larger dimensions than the other two portions 945B and 945C. It is understood that the dimensions of the portions that form the output beams for the multiple transmitter channels can be configured in any manner based on the beam sizes (e.g., sizes of the one or more of collimated light beam, beams formed internally in the optical prism-based beam splitter, or the output light beams), distance between the beams (e.g., about 3.1-3.4mm), the desired optical path, the incident beam angle, the inter beam angle, the optical coating characteristics, the dimensions of the transition zones, etc.

With reference back to FIGs. 8A and 9A, prism-based beam splitter 830 comprises a chamfered corner 837. The chamfered corner 837 can be formed by facets 847 and 848. The chamfered corner 837 of beam splitter 830 can be used as a reference for assembling the beam splitter with other components of the transmitter. For instance, the chamfered corner 837 can be positioned near the same end of facet 842 where the first portion 834A is. The chamfered corner 837 thus indicates which end of facet 842 is for receiving the input light beam. Furthermore, in some embodiments, the chamfered corner and/or its opposing facet (e.g., facet 845) can be used to provide flat surfaces for mounting beam splitter 830 on other flat surfaces. FIG. 9A also illustrates that beam splitter 830 may include side facets 846 and 849. These two facets may or may not interact with the light beams and thus may or may not have optical coatings.

While prism-based beam splitter 830 is described above as providing multiple output beams having equal or substantially equal beam intensities, it is understood that the optical characteristics of a beam splitter can be configured to provide any other desired beam intensity combinations. Using FIG. 7 as an illustration, all output transmission beams 732 may have the same wavelength but different intensities. In another combination, some output transmission beams 732 may have the same intensities but some may have different intensities from others. The differences of the beam intensities can also be customized by properly configuring the reflectivity and transmissivity of the optical coatings. In some embodiments, beam splitter 730 can also be a dispersive prism, which is configured to perform wavelength splitting. If a dispersive prism is used, output transmission beams 732 may have different wavelengths. In some embodiments, beam splitter 730 can also be a polarizing prism, which is configured to perform polarization splitting. If a polarization prism is used, output transmission light beams 732 may have different polarizations. Transmission light beams having different wavelengths and/or different polarizations may be used in some LiDAR system to reduce interference and improve signal quality. In some embodiments, beam splitter 730 can include one or more prisms to perform one or more of beam intensity splitting, wavelength splitting, and polarization splitting.

In the above embodiments described in FIGs. 8 and 9, facet 842 (e.g., the front facet that receives the incident light beam 806) is disposed with partial reflection coatings and an anti-reflection coating; and facet 844 (e.g., the back facet) is disposed with a high reflection coating. In some embodiments, a portion of the front facet (or another facet) that receives the incident light beam can be disposed with an anti-reflection coating for receiving the collimated light beam. Another portions of the front facet can be disposed with a high-reflection coating for subsequent reflections of one or more internal beams. And the back facet can be disposed with one or more partial reflection coatings facilitating transmission in part, and reflection in part, of the one or more internal beams. The one or more internal beams can be formed inside the optical prism-based beam splitter based on the collimated light beam. In this embodiment, the output light beams are transmitted out from the back facet, rather than the front facet that receives the incident light beam. And the optical coatings disposed on the front and back facets can be configured such that the output light beams have substantially equal light intensity. It is understood that optical coatings (anti-reflection coatings, high-reflection coatings, partial reflection coatings) can be disposed on one or more facets of the optical beam splitter in any desired manner to obtain the output light beams having desired light intensities and light directions.

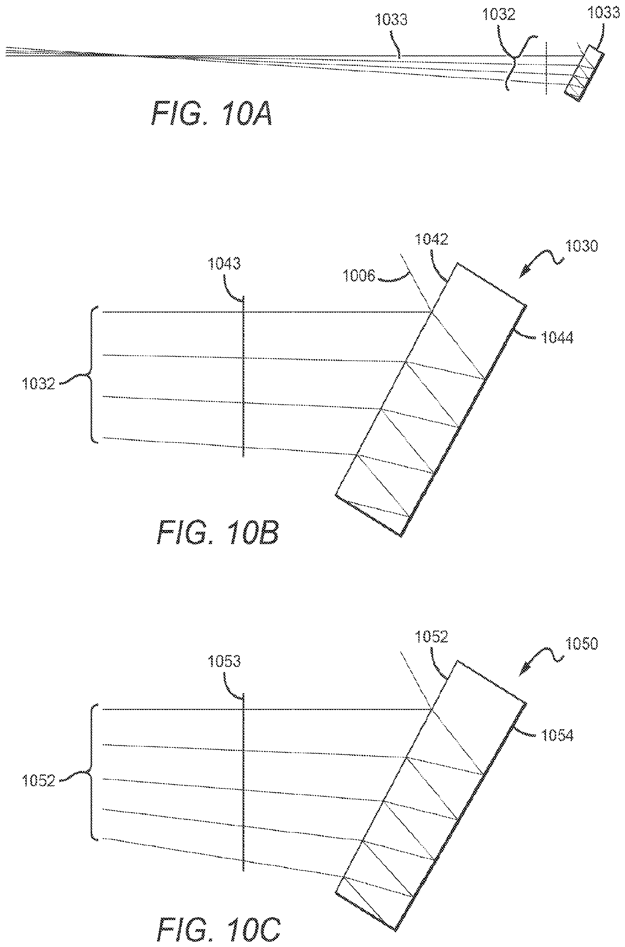

FIGs. 10A and 10B illustrate an example optical prism-based beam splitter 1030 having a small wedge angle between the front and back facets according to some embodiments. Prism-based beam splitter 1030 is similarly implemented as beam splitter 730 and 830 described above. As described above, for a transmitter having multiple channels, it is desirable that the neighboring transmitter channels are separated by an angular channel spacing. The angular channel spacing is a parameter that measures or represents the degree of angular separation between the transmission light beams (e.g., output beams 1032 formed by beam splitter 1030). The transmission light beams are the light beams transmitted to scan an FOV.

As shown in FIG. 10A, the angular channel spacing also relates to the inter beam angle 1033, which is an angle formed between the two adjacent transmission light beams (e.g., the angle between the top two output beams 1032). If the inter beam angle increases, the angular separation between the transmission light beams increases, and so is the angular channel spacing. In one embodiment, this inter beam angle is configured to be about 1.12 degrees. The inter beam angle, which represents the angular channel spacing, can be determined based on one or more of a required LiDAR scan resolution, a region-of-interest (ROI) requirement, and a scan range of the field-of-view. For example, a smaller angular channel spacing (and/or a larger number of transmitter channels) may be required for a higher scanning resolution. An ROI may need to be scanned with a higher resolution while a non-ROI may use a lower resolution scan. Therefore, the scanning performance of the LiDAR system can be improved by using multiple transmitter channels having a properly configured angular channel spacing. In some embodiments, the angular channel spacing is configured to be between about 0.5 degrees to 2.5 degrees.

The angular channel spacing of a multiple-channel transmitter relates to the geometry of the prism-based beam splitter 1030. As shown in FIG.

10B, in one embodiment, beam splitter 1030 comprises two facets 1042 and 1044. Facets 1042 and 1044 are the front and back facets of beam splitter 1030, and are similar to facets 842 and 844, respectively, as described above. For example, facet 1042 is oriented to receive the input light beam 1006 and configured to have optical coatings with proper optical characteristics to form the output light beams 1032. Facet 1044 may be a facet that has a high reflection coating to reflect all or substantially all internal light beams. In some embodiments, to provide the proper angular channel spacing, the orientations of facets 1042 and 1044 are such that they are not parallel to each other. For example, facets 1042 and 1044 can be configured to tilt toward each other such that beam splitter 1030 forms a trapezoidal-shaped side facet as shown in FIG. 10B. Facets 1042 and 1044 are also referred to as wedged surfaces and the angle between the facets 1042 and 1044 are referred to as the wedge angle. In some examples, the wedge angle is about 0.34 degrees. It is understood that FIG. 10B exaggerates the wedge angle for illustration purposes.

In some embodiments, the wedge angle can be configured based on the angular channel spacing, or vice versa. For instance, the angular channel spacing may be determined to be about three times of the wedge angle. FIG. 10C shows another example of a prism-based beam splitter 1050, where the wedge angle between facets 1052 and 1054 is about 0.68 degrees. It is understood that FIG. 10C also exaggerates the wedge angle for illustration purposes. Comparing FIG. 10B and FIG. 10C, doubling the wedge angle increases (e.g., triples) the inter beam angle (and therefore increasing the angular channel spacing), such that the neighboring output beams are less parallel. As shown in FIG. 10C, increasing the wedge angle may also increase the number of output beams (e.g., to five beams compared to four beams in FIG. 10B). Increasing the number of output beams may decrease the inter beam spacing. The inter beam spacing refers to the physical distance between two neighboring beams at a certain position from the beam splitter. In FIG. 10B, for instance, the inter beam spacing between two neighboring output beams at the position indicated by line 1043 may be about 3mm. In FIG. 10C, the inter beam spacing between the two neighboring output beams at the same position (indicated by line 1053) is reduced to be less than 3mm. Increasing the number of output beams may be desirable for improving the scanning resolution and speed. However, reducing the inter beam spacing may cause increased optical crosstalk or interference. Proper configuration of the geometry of the beam splitter is thus required to achieve the improvement while keeping the crosstalk or interference low.

It is understood that the wedge angle of a prism-based beam splitter (e.g., beam splitter 1030 or 1050) is one of several parameters that affect the optical characteristics of the output beams (e.g., the inter beam angle, the number of beams, the intensity of the beams, or the like). Other parameters may also affect the characteristics of the output beams of the beam splitter. Such parameters include the thickness of the prism-based beam splitter, the incident beam angle, the tilt angle or orientation of the prism-based beam splitter, etc. For instance, increasing the thickness of the prism-based beam splitter may reduce the inter beam angle and/or reduce the number of output beams. It is understood that one or more of these parameters can be properly configured to obtain desired optical characteristics of the output light beams.

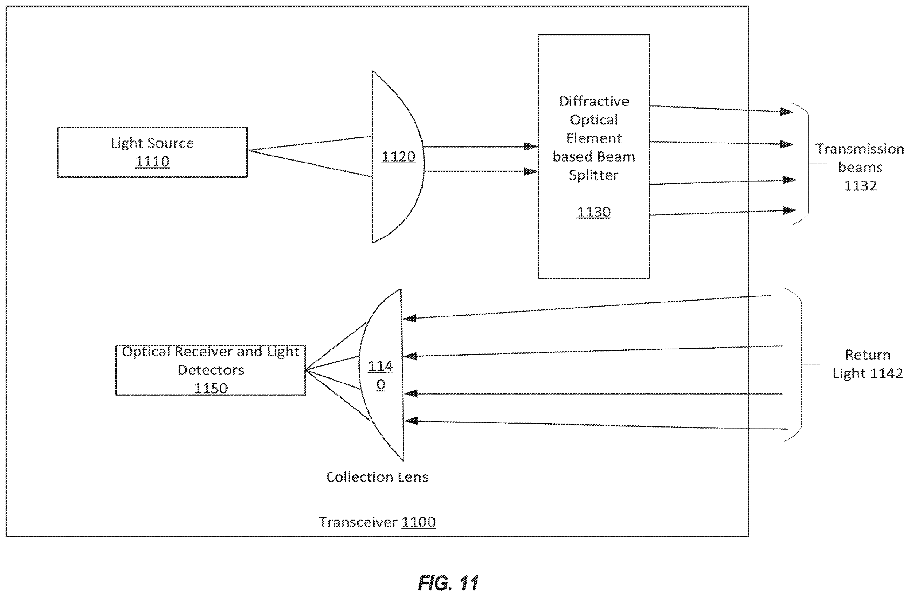

FIG. 11 is a block diagram of an example transceiver 1100 of a LiDAR system according to some embodiments which are not according to the claims. Transceiver 1100 is the same or substantially the same as transceiver 700, except that a diffractive optical element (DOE) based beam splitter 1130 is used to replace the prism-based beam splitter 730. Light source 1110, collimation lens 1120, collection lens 1140, and optical receiver and light detectors 1150 are the same or substantially the same as light source 710, collimation lens 720, collection lens 740, and optical receiver and light detectors 750, respectively. These components are thus not repeatedly described. Similar to those described above, collection lens 1140 can be positioned on the side of collimation lens 1120, or any desired locations, to maximize the optical aperture for collecting return light. In addition, the components can be arranged such that the transceiver 1100 is more compact. Transceiver 1100 can provide transmission light beams 1132 to, for example, a steering mechanism (e.g., steering mechanism 340 as shown in FIG. 3), which scan the transmission light beams 1132 to a FOV. Return light 1142 can be generated when one or more of the steered transmission light beams reflect or scatter from an object in the FOV. In some examples, the steering mechanism directs the return light 1142 to transceiver 1100, which redirects the return light 1142 to the collection lens 1140 and subsequently to optical receiver and light detectors 1150.

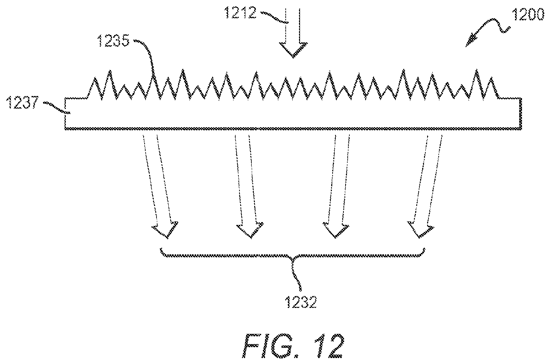

FIG. 12 illustrates a diffractive optical element (DOE) based beam splitter 1200 according to some embodiments which are not according to the claims. Diffractive optical elements are thin phase elements that operate by means of interference and diffraction to produce desired distributions of light. Similar to the embodiments described above, an incident light beam 1212 for the DOE based beam splitter 1200 can be generated using a light source (e.g., light source 1110 in FIG. 11) and collimated by a collimation lens (e.g., lens 1120 in FIG. 11). Thus, light beam 1212 can be a collimated light beam. Light beam 1212 is then directed to the DOE-based beam splitter 1200.

In some embodiments not according to the claims, DOE-based beam splitter 1200 has thin phase elements that are configured to form and distribute multiple light beams as shown in FIG. 12. DOE-based beam splitter 1200 can have binary or analog phase profiles. For a DOE-based beam splitter, a binary profile can be used if feature sizes are too small for analog fabrication and/or if the desired output light pattern or spot array has centro-symmetry. For example, a DOE-based beam splitter having a binary profile can be used to produce a square output light pattern but not a triangular output light pattern. A DOE-based beam splitter having an analog phase profile comprises analog, continuous-phase diffractive elements that can be used to produce more general output light patterns. In one embodiment, the thin phase elements of DOE-based beam splitter 1200 include micro- or nano-structures for forming output transmission beams 1232 at different transmission angles based on light beam 1212. The multiple output transmission beams 1232 can form a 1-dimensional array (shown in FIG. 12) or a 2-dimensional array. One such micro- or nano-structure of a DOE-based beam splitter 1200 is illustrated in FIG. 12.

In FIG. 12, the thin phase elements form a surface structure 1235 that varies on the micron, sub-micron, or nanometer scale, thereby enabling a desired output light pattern to be formed. One such output light pattern is illustrated in FIG. 12 as output transmission beams 1232. In FIG. 12, DOE-based beam splitter 1200 receives light beam 1212 and forms four output transmission beams 1232 angularly separated by an inter beam angle (e.g., about 1.12 degree). The micro- or nano-structure of the DOE-based beam splitter 1200 can also be configured such that output transmission beams 1232 are directed to different transmission angles with a proper inter beam spacing, similar to output light beams 832 as described above. By having different transmission angles, output transmission beams 1232 are separated from one another at a desired or predetermined angular separation and inter beam spacing. DOE-based beam splitter 1200 thus effectively provides transmitter channels having a desired angular channel spacing. As described above, the angular channel spacing is a parameter that measures or represents the degree of angular separation between the output transmission light beams. In this embodiment using DOE-based beam splitter 1200, the angular channel spacing is related to the micro- or nano-structures of DOE-based beam splitter 1200. When the angular channel spacing is properly configured by configuring the micro- or nano-structure of DOE-based beam splitter 1200, the multiple output transmission light beams 1232 are positioned apart at a desired angular separation to scan different areas within an FOV, providing a good coverage of the scanned areas and improving the scan resolution and speed. In some embodiments, output transmission light beams 1232 may be directed to one or more focusing lenses before they are directed to scan an FOV.

In some embodiments not according to the claims, the DOE-based beam splitter 1200 include an optical plate 1237 and surface structures 1235 disposed on a facet of the optical plate 1237. The optical characteristics of the facet and the surface structures 1235 thereon can be configured such that the output transmission light beams 1232 have equal or substantially equal beam intensities (e.g., within +/- 2%). For instance, by controlling the design of the diffractive pattern and depositing the thin phase elements according to the diffraction pattern on multiple portions of the top facet of optical plate 1237, the resulting micro- or nano- structures formed thereon can facilitate forming multiple transmission beams 1232 with equal or substantially equal beam intensities. In some embodiments, the micro- or nano- structures of the DOE-based beam splitter 1200 are configured such that one or more of the output transmission light beams 1232 have different beam intensities than other beams.

In some embodiments not according to the claims, the diffractive pattern for a DOE-based beam splitter can be designed or configured based on the principle of designing a diffraction grating. For example, to obtain the diffractive pattern, a repetitive pattern can be etched on the facet of an optical substrate (e.g., optical plate 1237). The depth of the etching pattern is roughly on the order of the wavelength of light in the application (e.g., the 1550nm light used in the LiDAR application), with an adjustment factor related to the substrate's index of refraction. The etching pattern includes, for instance, identical sub-pattern units that repeat cyclically. The identical sub-pattern units are also referred to as periods. The width $d$ of a period is related to the inter beam angle $\theta$ between output beams of the DOE-based beam splitter according to the grating equation:

$$d\sin \theta_m = ml$$

In the above equation, $m$ denotes the order of the diffracted beam, with the zero order output simply being the un-diffracted continuation of the input beam of the DOE-based beam splitter.

The above equation can be used to determine the direction of the output beams. The beam intensity distribution is defined by the etching profile within the unit period, which can involve multiple (not less than two) etching transitions of varying duty cycles. In a 1-dimensional diffractive beam splitter, the diffractive pattern is linear, while a 2-dimensional element may have a more complex pattern.

While FIG. 12 illustrates only four output transmission beams 1232, it is understood that, by properly configuring the structural profile of DOE-based beam splitter 1200, any number of output transmission light beams can be formed by DOE-based beam splitter 1200 at any desired transmission angles. Moreover, the output transmission light beams can also form a one-dimensional array or a two-dimensional array. In some embodiments, to form multiple output transmission light beams (e.g., beams 1232), DOE-based beam splitter 1200 can comprise a grating-type structure with certain preconfigured shape that facilitates the formation of the desired light distribution.

As described above, a DOE-based beam splitter can have a binary phase profile or a continuous phase profile. Both profiles can be used to perform beam splitting such that multiple output light beams are formed from the input light beam. In some embodiments not according to the claims, a DOE-based beam splitter comprises a first DOE plate area and a second DOE plate area. The first DOE plate area comprises micro- or nano-structures that can process (e.g., diffract), for example, about 80% of the incident light beam and form the 1-dimensional or 2-dimensional array of output transmission beams. The second DOE plate area may comprise micro- or nano-structures that can process, for example, about 20% of the incident beam. It is understood that an output light beam pattern having any dimensions can be formed by properly configuring the DOE-based beam splitter.

As described above, embodiments disclosed herein provide multiple transmitter channels using a prism-based beam splitter and/or a DOE-based beam splitter. The use of the prism-based beam splitter and/or the DOE-based beam splitter eliminates or reduces the number of components required for each transmitter channel. For example, no separate collimation lens or other optics is required for each transmitter channel. As a result, many transmitter channels can be assembled or integrated into a small space, thereby reducing the dimensions of the transceiver and making the LiDAR system more compact. Moreover, the complexity of the alignment of the transmitter channels in a transceiver is also reduced because the transmission light beams are aligned once the prism-based or DOE-based beam splitter is manufactured.

As described above, a collimation lens can be used to collimate the light beam provided by the light source to form the collimated light beam for the beam splitter. The beam splitter forms multiple output light beams used as transmission beams. The transmission beams are directed to a steering mechanism, which facilitates scanning the beams to an FOV. The transmission beams illuminate one or more objects in the FOV and are scattered or reflected to form return light. As shown in FIGs. 7 and 11, the return light is directed by the steering mechanism (shown in FIG. 3) to the collection lens. In some embodiments, the collimation lens and the collection lens in the transceiver may be disposed side-by-side for improving the optical aperture of the collection lens. The collection lens directs the return light to the optical receiver and light detectors. The optical receiver, in some embodiments, comprises a plurality of receiver channels having optical fibers. The receiver channels are optically coupled to the collection lens. Each of the receiver optical fibers in the receiver channels is optically aligned based on the transmission angle of a correspond transmission beam. For example, the receiver optical fiber of a particular receiver channel is positioned at an angle that corresponds to the transmission angle of the corresponding transmitter channel. The matching of the transmission angle of a transmitter channel and the receiving angle of a corresponding receiving channel facilitates receiving the return light properly by the correct receiving channel. As a result, the receiving performance can be improved. In some embodiments, a detector assembly is optically coupled to the corresponding receiver channel to receive and detect the return light.

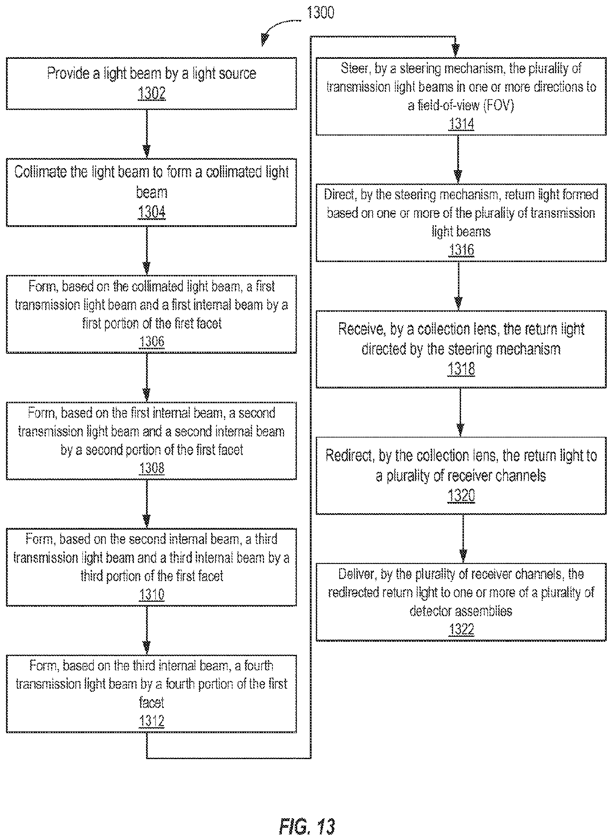

FIG. 13 is a flowchart illustrating a method 1300 for providing a plurality of transmission light beams used for a LiDAR scanning system according to some embodiments. Method 1300 may begin with step 1302, which provides a light beam by a light source. In step 1304, the light beam is collimated by a collimation lens to form a collimated light beam. In steps 1306-1312, a plurality of (e.g., four) transmission light beams are formed by an optical beam splitter. Optical characteristics of a plurality of portions (e.g., portions 843A-D shown in FIGs. 8B and 9A) of a first facet (e.g., facet 842) of the optical beam splitter are configured to facilitate forming the plurality of transmission light beams with substantially equal light intensity.

Specifically, in step 1306, a first portion (e.g., portion 843A) of the first facet receives the collimated light beam and forms a first transmission light beam and a first internal beam. The first portion of the first facet has a first optical coating (e.g., a partial reflection coating having 25% reflectivity and 75% transmissivity).

In step 1308, a second portion (e.g., portion 843B) of the first facet receives the first internal beam and forms a second transmission light beam and a second internal beam. The second portion has a second optical coating (e.g., a partial reflection coating having 33% reflectivity and 67% transmissivity). In some embodiments, the first optical coating and second optical coating have one or more different optical characteristics.

In step 1310, a third portion (e.g., portion 843C) of the first facet receives the second internal beam and forms a third transmission light beam and a third internal beam. The third portion has a third optical coating (e.g., a partial reflection coating having 50% reflectivity and 50% transmissivity). In some embodiments, the third optical coating has one or more optical characteristics that is different from the first optical coating or the second optical coating.

In step 1312, a fourth portion (e.g., portion 843D) of the first facet receives the third internal beam and forms a fourth transmission light beam. The fourth portion has a fourth optical coating (e.g., an anti-reflection coating).

While steps 1306-1312 illustrate forming four transmission light beams using the optical beam splitter, it is understood that any number of transmission light beams can be formed in a similar manner.

In step 1314, a steering mechanism steers the plurality of transmission light beams in one or more directions to a field-of-view (FOV). The steered transmission light beams illuminate one or more objects in the FOV. Return light is formed when the steered transmission light beams reflect or scatter from the one or more objects.

In step 1316, the steering mechanism directs the return light formed based on one or more of the plurality of transmission light beams. In step 1318, a collection lens receives the return light directed by the steering mechanism. In step 1320, the collection lens redirects the return light to a plurality of receiver channels comprising receiver optical fibers optically coupled to the collection lens. Each of the receiver optical fibers is optically aligned based on a transmission angle of a corresponding transmission light beam.

In step 1322, the plurality of receiver channels delivers the redirected return light to one or more of a plurality of detector assemblies optically coupled to the plurality of receiver channels.

## Claims

1. A light detection and ranging, LiDAR, scanning system, comprising:

   a light source (710) providing a light beam (712);
   a collimation lens (720) optically coupled to the light source (710) to form a collimated light beam (722) based on the light beam (712); and
   an optical beam splitter (730) configured to form a plurality of output light beams (732) based on the collimated light beam (722);

   wherein optical characteristics of the optical beam splitter (730) are configured to facilitate forming the plurality of output light beams (732) with substantially equal light intensity, and wherein the optical characteristics comprise one or more of transmission, reflection, and diffraction characteristics
   wherein the optical beam splitter (730) comprises an optical prism-based beam splitter (830) configured to have a geometry such that two neighboring output light beams of the plurality of output light beams (832) form a predetermined inter beam angle;
   the LIDAR scanning system **characterised in that**,
   the predetermined inter beam angle is formed by configuring a first facet (842) and a second facet (844) of the optical prism-based beam splitter (830) as opposing facets with an angular offset from each other;
   wherein the first facet (842) is configured to receive the collimated light beam (806) at a beam incident angle, the first facet (842) being disposed with one or more partial reflection coatings.

2. The system of claim 1, wherein the second facet (844) being disposed with a high reflection coating facilitating reflection of substantially all of one or more internal beams (833), the one or more internal beams (833) being formed inside the optical prism-based beam splitter (830) based on the collimated light beam (806).

3. The system of any of claims 1 and 2, wherein the first facet (842) includes a plurality of portions (843), the plurality of portions (843) of the first facet (842) being disposed with a plurality of optical coatings, and wherein at least two of the plurality of optical coatings have different optical characteristics.

4. The system of claim 3, wherein the plurality of portions (843) of the first facet (842) comprises consecutive portions (943), each of the plurality of portions (843) of the first facet (842) being disposed with a respective optical coating configured to facilitate forming the output light beams (832) with substantially equal light intensity.

5. The system of any of claims 1-4, wherein a portion of the first facet (842) or another facet is disposed with an anti-reflection coating for receiving the collimated light beam (806);

   wherein one or more another portions of the first facet are disposed with a high-reflection coating for subsequent reflections of one or more internal beams, and
   wherein the second facet (844) is disposed with one or more partial reflection coatings facilitating transmission in part, and reflection in part, of the one or more internal beams, the one or more internal beams being formed inside the optical prism-based beam splitter (830) based on the collimated light beam (806).

6. The system of claim 5, wherein a plurality of portions of the second facet (844) are disposed with a plurality of optical coatings, transmission and reflection characteristics of the plurality of optical coatings are configured to form the output light beams (832) with substantially equal light intensity.

7. The system of any of claims 5 and 6, wherein the plurality of portions of the second facet (844) comprises consecutive portions, each of the plurality of portions of the second facet (844) being disposed with a respective optical coating configured to facilitate forming the output light beams (832) with substantially equal light intensity.

8. The system of any of claims 1-7, wherein the plurality portions of the first facet (842) comprises a first portion having a first optical coating and a second portion having a second optical coating,

wherein the first optical coating facilitates forming, based on the collimated light beam (806), a first output light beam of the plurality of output light beams (832) and a first internal beam, and wherein the second optical coating facilitates forming, based on the first internal beam, a second output light beam of the plurality of output light beams (832).

9. The system of any of claims 1-8, wherein dimensions of the plurality of portions (843) of the first facet (842) are based on one or more of a beam size, an incident beam angle, an inter beam angle, and optical coating characteristics.

10. The system of any of claims 1-9, wherein a third facet (847) and a fourth facet (848) of the optical prism-based beam splitter (830) form a chamfered corner (837).

11. The system of any of claims 1-10, further comprising:

   a collection lens (740) disposed to receive and redirect return light (742) generated based on the plurality of output light beams (732);
   a plurality of receiver channels (750) optically coupled to the collection lens (740), wherein each of the receiver channels (750) is optically aligned based on a transmission angle of a corresponding output light beam (732); and
   a plurality of detector assemblies optically coupled to the plurality of receiver channels (750), wherein each of the receiver channels directs redirected return light to a detector assembly of the plurality of detector assemblies.

12. A vehicle comprising the light detection and ranging, LiDAR, scanning system of any of claims 1-11.

**Patentansprüche**

1. LiDAR- (Light Detection and Ranging) -Scanning-System, umfassend:

   eine Lichtquelle (710), die einen Lichtstrahl (712) bereitstellt;
   eine Kollimationslinse (720), die optisch mit der Lichtquelle (710) gekoppelt ist, um einen kollimierten Lichtstrahl (722) auf Basis des Lichtstrahls (712) zu bilden; und
   einen optischen Strahlteiler (730), der zum Bilden einer Mehrzahl von Ausgangslichtstrahlen (732) auf Basis des kollimierten Lichtstrahls (722) konfiguriert ist;

      wobei optische Eigenschaften des optischen Strahlteilers (730) zum Ermöglichen des Bildens der Mehrzahl von Ausgangslichtstrahlen (732) mit im Wesentlichen gleicher Lichtintensität konfiguriert sind und wobei die optischen Eigenschaften eine oder mehrere von Transmissions-, Reflexions- und Beugungseigenschaften umfassen,

wobei der optische Strahlteiler (730) einen auf einem optischen Prisma basierenden Strahlteiler (830) umfasst, der so konfiguriert ist, dass er eine Geometrie aufweist, bei der zwei benachbarte Ausgangslichtstrahlen der Mehrzahl von Ausgangslichtstrahlen (832) einen vorbestimmten Strahlzwischenwinkel bilden;

wobei das LIDAR-Abtastsystem **dadurch gekennzeichnet ist, dass**

der vorbestimmte Strahlzwischenwinkel durch Konfigurieren einer ersten Facette (842) und einer zweiten Facette (844) des auf einem optischen Prisma basierenden Strahlteilers (830) als einander gegenüberliegende Facetten mit einem Winkelversatz zueinander gebildet wird;

wobei die erste Facette (842) zum Empfangen des kollimierten Lichtstrahls (806) unter einem Strahleinfallswinkel konfiguriert ist, wobei die erste Facette (842) mit einer oder mehreren Teilreflexionsbeschichtungen versehen ist.

2. System nach Anspruch 1, wobei die zweite Facette (844) mit einer hochreflektierenden Beschichtung versehen ist, die die Reflexion von im Wesentlichen allen von einem oder mehreren inneren Strahlen (833) erleichtert, wobei der eine oder die mehreren inneren Strahlen (833) in Inneren des auf einem optischen Prisma basierenden Strahlteilers (830) auf Basis des kollimierten Lichtstrahls (806) gebildet werden.

3. System nach einem der Ansprüche 1 und 2, wobei die erste Facette (842) eine Mehrzahl von Teilen (843) umfasst, wobei die Mehrzahl von Teilen (843) der ersten Facette (842) mit einer Mehrzahl von optischen Beschichtungen versehen ist und wobei mindestens zwei der Mehrzahl von optischen Beschichtungen unterschiedliche optische Eigenschaften aufweisen.

4. System nach Anspruch 3, wobei die Mehrzahl von Teilen (843) der ersten Facette (842) aufeinanderfolgende Teile (943) umfasst, wobei jeder der Mehrzahl von Teilen (843) der ersten Facette (842) mit einer jeweiligen optischen Beschichtung versehen ist, die zum Ermöglichen des Bildens der Ausgangslichtstrahlen (832) mit im Wesentlichen gleicher Lichtintensität konfiguriert ist.

5. System nach einem der Ansprüche 1 bis 4, wobei ein Teil der ersten Facette (842) oder einer anderen Facette mit einer Antireflexbeschichtung zur Aufnahme des kollimierten Lichtstrahls (806) versehen ist;

wobei ein oder mehrere weitere Teile der ersten Facette mit einer hochreflektierenden Beschichtung für nachfolgende Reflexionen von einem oder mehreren Innenstrahlen versehen sind, und

wobei die zweite Facette (844) mit einer oder mehreren Teilreflexionsbeschichtungen versehen ist, die eine teilweise Transmission und eine teilweise Reflexion des einen oder der mehreren Innenstrahlen ermöglichen, wobei der eine oder die mehreren Innenstrahlen im Inneren des auf einem optischen Prisma basierenden Strahlteilers (830) auf Basis des kollimierten Lichtstrahls (806) gebildet werden.

6. System nach Anspruch 5, wobei eine Mehrzahl von Teilen der zweiten Facette (844) mit einer Mehrzahl von optischen Beschichtungen versehen ist, wobei Transmissions- und Reflexionseigenschaften der Mehrzahl von optischen Beschichtungen zum Bilden der Ausgangslichtstrahlen (832) mit im Wesentlichen gleicher Lichtintensität konfiguriert sind.

7. System nach einem der Ansprüche 5 und 6, wobei die Mehrzahl von Teilen der zweiten Facette (844) aufeinanderfolgende Teile umfasst, wobei jeder der Mehrzahl von Teilen der zweiten Facette (844) mit einer jeweiligen optischen Beschichtung versehen ist, die zum Ermöglichen des Bildens der Ausgangslichtstrahlen (832) mit im Wesentlichen gleicher Lichtintensität konfiguriert sind.

8. System nach einem der Ansprüche 1 bis 7, wobei die Mehrzahl von Teilen der ersten Facette (842) einen ersten Teil mit einer ersten optischen Beschichtung und einen zweiten Teil mit einer zweiten optischen Beschichtung umfasst,

wobei die erste optische Beschichtung das Bilden, auf Basis des kollimierten Lichtstrahls (806), eines ersten Ausgangslichtstrahls der Mehrzahl von Ausgangslichtstrahlen (832) und einen ersten Innenstrahl ermöglicht und

wobei die zweite optische Beschichtung das Bilden eines zweiten Ausgangslichtstrahls der Mehrzahl von Ausgangslichtstrahlen (832) auf Basis des ersten Innenstrahls ermöglicht.

9. System nach einem der Ansprüche 1 bis 8, wobei Abmessungen der Mehrzahl von Teile (843) der ersten Facette (842) auf einem oder mehreren von einer Strahlgröße, einem Einfallsstrahlwinkel, einem Strahlzwischenwinkel und Eigenschaften der optischen Beschichtung basieren.

10. System nach einem der Ansprüche 1 bis 9, wobei eine dritte Facette (847) und eine vierte Facette (848) des auf einem optischen Prisma basierenden Strahlteilers (830) eine abgeschnittene Ecke (837) bilden.

11. System nach einem der Ansprüche 1 bis 10, ferner umfassend:

> eine Sammellinse (740), die zum Empfangen und Umlenken von auf Basis der Mehrzahl von Ausgangslichtstrahlen (732) erzeugtem Rückstreulicht (742) angeordnet ist;
> eine Mehrzahl von Empfangskanälen (750), die optisch mit der Sammellinse (740) gekoppelt sind, wobei jeder der Empfangskanäle (750) auf Basis eines Transmissionswinkels eines entsprechenden Ausgangslichtstrahls (732) optisch ausgerichtet ist; und
> eine Mehrzahl von Detektoreinheiten, die optisch mit der Mehrzahl von Empfangskanälen (750) gekoppelt sind, wobei jeder der Empfangskanäle das umgelenkte Rückstreulicht zu einer Detektoreinheit der Mehrzahl von Detektoreinheiten leitet.

12. Fahrzeug, das das LiDAR- (Light Detection and Ranging) -Scanning-System nach einem der Ansprüche 1 bis 11 umfasst.


**Revendications**

1. Système de balayage par détection et de télémétrie par la lumière, LiDAR, comprenant :

> une source lumineuse (710) fournissant un faisceau lumineux (712) ;
> une lentille de collimation (720) couplée optiquement à la source lumineuse (710) pour former un faisceau lumineux collimaté (722) à partir du faisceau lumineux (712) ; et
> un séparateur de faisceau optique (730) configuré pour former une pluralité de faisceaux lumineux de sortie (732) à partir du faisceau lumineux collimaté (722) ;
>
>> dans lequel des caractéristiques optiques du séparateur de faisceau optique (730) sont configurées pour faciliter la formation de la pluralité de faisceaux lumineux de sortie (732) avec une intensité lumineuse sensiblement égale, et dans lequel les caractéristiques optiques comprennent une ou plusieurs caractéristiques de transmission, de réflexion et de diffraction
>> dans lequel le séparateur de faisceau optique (730) comprend un séparateur de faisceau optique à base de prisme (830) configuré pour avoir une géométrie telle que deux faisceaux lumineux de sortie voisins de la pluralité de faisceaux de sortie (832) forment un angle inter-faisceaux prédéterminé ;
>> le système de balayage LIDAR étant **caractérisé en ce que**,
>> l'angle inter-faisceaux prédéterminé est formé en configurant une première facette (842) et une seconde facette (844) du séparateur de faisceau optique à base de prisme (830) en tant que facettes opposées présentant un décalage angulaire l'une par rapport à l'autre ;
>> dans lequel la première facette (842) est configurée pour recevoir le faisceau lumineux collimaté (806) à un angle d'incidence de faisceau, la première facette (842) étant agencée avec ou plusieurs revêtements de réflexion partielle.

2. Système selon la revendication 1, dans lequel la seconde facette (844) est agencée avec un revêtement de haute réflexion facilitant la réflexion de sensiblement tous les un ou plusieurs faisceaux internes (833), les un ou plusieurs faisceaux internes (833) étant formés à l'intérieur du séparateur de faisceau optique à base de prisme (830) à partir du faisceau lumineux collimaté (806).

3. Système selon l'une quelconque des revendications 1 et 2, dans lequel la première facette (842) comporte une pluralité de parties (843), la pluralité de parties (843) de la première facette (842) étant agencée avec une pluralité de revêtements optiques, et dans lequel au moins deux de la pluralité de revêtements optiques présentent des caractéristiques optiques différentes.

4. Système selon la revendication 3, dans lequel la pluralité de parties (843) de la première facette (842) comprend des parties consécutives (943), chacune de la pluralité de parties (843) de la première facette (842) étant agencée avec un revêtement optique respectif configuré pour faciliter la formation des faisceaux lumineux de sortie (832) avec une intensité lumineuse sensiblement égale.

5. Système selon l'une quelconque des revendications 1 à 4, dans lequel une partie de la première facette (842) ou d'une autre facette est agencée avec un revêtement antireflet pour recevoir le faisceau lumineux collimaté (806) ;

dans lequel une ou plusieurs autres parties de la première facette sont agencées avec un revêtement de haute réflexion pour des réflexions ultérieures d'un ou plusieurs faisceaux internes, et

dans lequel la seconde facette (844) est agencée avec un ou plusieurs revêtements de réflexion partielle facilitant la transmission en partie, et la réflexion en partie, des un ou plusieurs faisceaux internes, les un ou plusieurs faisceaux internes étant formés à l'intérieur du séparateur de faisceau optique à base de prisme (830) à partir du faisceau lumineux collimaté (806).

6. Système selon la revendication 5, dans lequel une pluralité de parties de la seconde facette (844) est agencée avec une pluralité de revêtements optiques, des caractéristiques de transmission et de réflexion de la pluralité de revêtements optiques sont configurées pour former les faisceaux lumineux de sortie (832) avec une intensité lumineuse sensiblement égale.

7. Système selon l'une quelconque des revendications 5 et 6, dans lequel la pluralité de parties de la seconde facette (844) comprend des parties consécutives, chacune de la pluralité de parties de la seconde facette (844) étant agencée avec un revêtement optique respectif configuré pour faciliter la formation des faisceaux lumineux de sortie (832) avec une intensité lumineuse sensiblement égale.

8. Système selon l'une quelconque des revendications 1 à 7, dans lequel la pluralité de parties de la première facette (842) comprend une première partie ayant un premier revêtement optique et une seconde partie ayant un second revêtement optique,

dans lequel le premier revêtement optique facilite la formation, à partir du faisceau lumineux collimaté (806), d'un premier faisceau lumineux de sortie de la pluralité de faisceaux lumineux de sortie (832) et d'un premier faisceau interne, et dans lequel le second revêtement optique facilite la formation, à partir du premier faisceau interne, d'un second faisceau lumineux de sortie de la pluralité de faisceaux de sortie (832).

9. Système selon l'une quelconque des revendications 1 à 8, dans lequel des dimensions de la pluralité de parties (843) de la première facette (842) sont basées sur un ou plusieurs d'une taille de faisceau, d'un angle d'incidence de faisceau, d'un angle inter-faisceaux et de caractéristiques de revêtement optique.

10. Système selon l'une quelconque des revendications 1 à 9, dans lequel une troisième facette (847) et une quatrième facette (848) du séparateur de faisceau optique à base de prisme (830) forment un coin chanfreiné (837).

11. Système selon l'une quelconque des revendications 1 à 10, comprenant en outre :

une lentille collectrice (740) agencée pour recevoir et rediriger une lumière de retour (742) générée à partir de la pluralité de faisceaux lumineux de sortie (732) ; une pluralité de canaux récepteurs (750) couplés optiquement à la lentille collectrice (740), dans lequel chacun des canaux récepteurs (750) est aligné optiquement en fonction de l'angle de transmission d'un faisceau lumineux de sortie correspondant (732) ; et une pluralité d'ensembles détecteurs couplés optiquement à la pluralité de canaux récepteurs (750), dans lequel chacun des canaux récepteurs dirige la lumière de retour redirigée vers un ensemble détecteur de la pluralité d'ensembles détecteurs.

12. Véhicule comprenant le système de balayage à détection et télémétrie par la lumière, LiDAR, selon l'une quelconque des revendications 1 à 11.

FIG. 1

**FIG. 2**

**LiDAR System**
**300**

Laser Source
310

312

314

Transmitter
320

322

332

Control Circuitry
350

Steering Mechanism
340

FOV

342

Optical Receiver and Light Detector
330

362

352

**FIG. 3**

FIG. 4

FIG. 5A

FIG. 5B

FIG. 5C

600

610

Processor

620

Persistent storage device

630

Main memory device

690

Input/output devices

680

Network interfaces

FIG. 6

FIG. 7

FIG. 8A

FIG. 8B

842  843A  843B  843C  843D  830

847  846  845

848

849  844

*FIG. 9A*

943F  943A  943B  943C  943D  943E

945D  945C  945B  945A

*FIG. 9B*

FIG. 10A

FIG. 10B

FIG. 10C

FIG. 11

FIG. 12

1300

```
┌─────────────────────────────────┐        ┌─────────────────────────────────┐
│  Provide a light beam by a       │        │  Steer, by a steering mechanism, │
│  light source                    │        │  the plurality of                │
│  1302                            │        │  transmission light beams in one │
└─────────────────────────────────┘        │  or more directions to           │
                │                           │  a field-of-view (FOV)           │
                ▼                           │  1314                            │
┌─────────────────────────────────┐        └─────────────────────────────────┘
│  Collimate the light beam to     │                        │
│  form a collimated light         │                        ▼
│  beam                            │        ┌─────────────────────────────────┐
│  1304                            │        │  Direct, by the steering         │
└─────────────────────────────────┘        │  mechanism, return light formed  │
                │                           │  based on one or more of the     │
                ▼                           │  plurality of transmission       │
┌─────────────────────────────────┐        │  light beams                     │
│  Form, based on the collimated   │        │  1316                            │
│  light beam, a first             │        └─────────────────────────────────┘
│  transmission light beam and a   │                        │
│  first internal beam by a        │                        ▼
│  first portion of the first      │        ┌─────────────────────────────────┐
│  facet                           │        │  Receive, by a collection lens,  │
│  1306                            │        │  the return light                │
└─────────────────────────────────┘        │  directed by the steering        │
                │                           │  mechanism                       │
                ▼                           │  1318                            │
┌─────────────────────────────────┐        └─────────────────────────────────┘
│  Form, based on the first        │                        │
│  internal beam, a second         │                        ▼
│  transmission light beam and a   │        ┌─────────────────────────────────┐
│  second internal beam            │        │  Redirect, by the collection     │
│  by a second portion of the      │        │  lens, the return light to       │
│  first facet                     │        │  a plurality of receiver         │
│  1308                            │        │  channels                        │
└─────────────────────────────────┘        │  1320                            │
                │                           └─────────────────────────────────┘
                ▼                                           │
┌─────────────────────────────────┐                        ▼
│  Form, based on the second       │        ┌─────────────────────────────────┐
│  internal beam, a third          │        │  Deliver, by the plurality of    │
│  transmission light beam and a   │        │  receiver channels, the          │
│  third internal beam by a        │        │  redirected return light to one  │
│  third portion of the first      │        │  or more of a plurality of       │
│  facet                           │        │  detector assemblies             │
│  1310                            │        │  1322                            │
└─────────────────────────────────┘        └─────────────────────────────────┘
                │
                ▼
┌─────────────────────────────────┐
│  Form, based on the third        │
│  internal beam, a fourth         │
│  transmission light beam by a    │
│  fourth portion of the first     │
│  facet                           │
│  1312                            │
└─────────────────────────────────┘
```

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021103034 A
- US 2019107622 A
- GB 1185322 A